# EUROPÄISCHE PATENTSCHRIFT

(11) **EP 3 031 112 B1**
(45) Veröffentlichungstag und Bekanntmachung des Hinweises auf die Patenterteilung: **29.11.2017**
(21) Anmeldenummer: 14753203.0
(22) Anmeldetag: 31.07.2014
(51) Int. Cl.: H02J 3/16

(54) **SYSTEM UND VERFAHREN ZUR REGELUNG DER FREQUENZ- UND/ODER SPANNUNGSHALTUNG AUS DEM VERTEILNETZ**
SYSTEM AND METHOD FOR CONTROLLING THE TRANSMISSION GRID FREQUENCY AND/OR VOLTAGE FROM THE DISTRIBUTION NETWORK
SYSTÈME ET PROCÉDÉ DE RÉGULATION DE LA FRÉQUENCE ET/OU DE LA TENSION D'UN RÉSEAU DE TRANSPORT À PARTIR DU RÉSEAU DE DISTRIBUTION

(30) Priorität: 05.08.2013 DE 102013012898
(43) Veröffentlichungstag der Anmeldung: 15.06.2016
(73) Patentinhaber: Technische Universität Dortmund, 44227 Dortmund (DE)
(72) Erfinder: REHTANZ, Christian, 44227 Dortmund (DE); KÖNIG, Dieter, 59425 Unna (DE); NOLL, Theresa, 46236 Bottrop (DE); GREVE, Marco, 44149 Dortmund (DE)
(74) Vertreter: Cohausz Hannig Borkowski Wißgott
(86) Internationale Anmeldenummer: PCT/EP2014/002101
(87) Internationale Veröffentlichungsnummer: WO 2015/018509

(56) Entgegenhaltungen:
- WO-A1-2013/106906
- DE-A1-102010 006 142
- GB-A- 2 407 927
- US-A1- 2009 216 387
- DUSHAN BOROYEVICH ET AL: "Future electronic power distribution systems a contemplative view", OPTIMIZATION OF ELECTRICAL AND ELECTRONIC EQUIPMENT (OPTIM), 2010 12TH INTERNATIONAL CONFERENCE ON, IEEE, PISCATAWAY, NJ, USA, 20. Mai 2010 (2010-05-20), Seiten 1369-1380, XP031709316, ISBN: 978-1-4244-7019-8
- ANGEL A AQUINO-LUGO ET AL: "A Control Framework for the Smart Grid for Voltage Support Using Agent-Based Technologies", IEEE TRANSACTIONS ON SMART GRID, IEEE, USA, Bd. 2, Nr. 1, 31. März 2011 (2011-03-31), Seiten 173-180, XP011349673, ISSN: 1949-3053, DOI: 10.1109/TSG.2010.2096238

## Beschreibung

Die Erfindung betrifft ein System und ein Verfahren zur Regelung der Spannungshaltung und/oder der Frequenzhaltung in einem Energieversorgungssystem, das ein Übertragungsnetz einer ersten Spannungsebene und zumindest ein damit über eine Umspanneinrichtung, insbesondere über wenigstens einen Transformator, gekoppeltes Verteilnetz einer zweiten, gegenüber der ersten Spannungsebene niedrigeren Spannungsebene aufweist, wobei das Verteilnetz mit einer Anzahl regelbarer Netzteilnehmer verbunden ist.

Eine der bedeutendsten zukünftigen Herausforderungen in Energieversorgungssystemen ist die Integration fluktuierender und nur bedingt planbarer Einspeisungen elektrischer Energie aus erneuerbaren Energien wie Windkraft und Photovoltaik in das elektrische Energieübertragungssystem. Diese Energieumwandlungsanlagen speisen vorwiegend dezentral in das Verteilnetz ein und lösen zunehmend konventionelle Großkraftwerke ab, die in das Übertragungsnetz einspeisen. Ein Verteilnetz umfasst die Spannungsebenen von 0,4 kV in der Niederspannung über die Mittelspannung bis zur 110 kV-Ebene in der Hochspannung (HS). Das Übertragungsnetz setzt sich aus den Höchstspannungsebenen (HöS) 220 kV und 380 kV zusammen.

Während die klassische unidirektionale Energieübertragung vom Großkraftwerk über das Übertragungsnetz und über das Verteilnetz zum Verbraucher erfolgt, führen die lokal installierten, zum Teil hohen Leistungen von erneuerbaren Energien dazu, dass bidirektionale Leistungsflüsse auf Verteilnetzebene auftreten. Hohe Rückspeisungen der dezentralen Energieumwandlungsanlagen sowie deren fluktuierende Verfügbarkeit und Einspeisecharakteristik führen zu einer steigenden Belastung des Übertragungsnetzes, da es diese Fluktuationen ausgleichen muss. Daher wird die Versorgungsaufgabe des Verteilnetzes nicht mehr ausschließlich aus der Verteilung des Stromes an den Endkunden bestimmt, sondern muss zunehmend einen Beitrag für einen sicheren und stabilen Systembetrieb leisten. Es müssen Konzepte entwickelt werden, die es ermöglichen, dass Anlagen aus dem Verteilnetz heraus sogenannte Systemdienstleistungen erbringen, d.h. die Spannung und die Frequenz überall im Energieversorgungssystem effizient und wirtschaftlich auf einem konstanten Sollwert halten, und somit die Aufgaben konventioneller Großkraftwerke in dem Energieversorgungssystem zu übernehmen, welches durch einen zunehmenden Anteil dezentraler Energieumwandlungsanlagen aus erneuerbaren Energien geprägt ist.

Systemdienstleistungen sind für einen stabilen und sicheren Betrieb des gesamten Netzverbundes notwendig und müssen somit zu jeder Zeit verfügbar sein. Die heutige Struktur von Energieversorgungsystemen sieht eine Erbringung von Systemdienstleistungen nahezu ausschließlich im Übertragungsnetz vor. Zu den Systemdienstleistungen, die im Rahmen der vorliegenden Erfindung von Relevanz sind, zählen
- die Frequenzhaltung durch die Bereitstellung von Regelleistung in Form von Primärregelleistung-, Sekundärregelleistung- und Minutenreserveleistung, die zur Sicherstellung des notwendigen Wirkleistungsgleichgewichts zwischen Energieerzeugung und Verbrauch vorgesehen ist, und
- die Spannungshaltung, die auf konventionelle Art im Übertragungsnetz im Wesentlichen durch die Bereitstellung von Blindleistung erfolgt.

Es ist Stand der Technik, dass die Frequenz- und auch die Spannungshaltung heute im Wesentlichen von netzbildenden Kernkraftwerken und fossil gefeuerten Kraftwerken, sogenannten Must-Run-Units, sichergestellt werden, die an das Übertragungsnetz angeschlossen sind. Der zuständige Übertragungsnetzbetreiber (ÜNB) trägt die Systemverantwortung und organisiert im Rahmen dieser Verantwortung die ausreichende Bereitstellung und Erbringung der Systemdienstleistungen, die zur Gewährleistung eines zuverlässigen Betriebs des Energieversorgungssystems notwendig sind.

Ziel der in Deutschland anvisierten Energiewende ist eine Integration der erneuerbaren Energien in das deutsche Energieversorgungssystem bis hin zur vollständigen Ablösung fossil gefeuerter Kraftwerke sowie Kernkraftwerke. Aufgrund des somit großen Anteils naturabhängiger, bzw. fluktuierender Einspeisungen insbesondere aus Wind- und Photovoltaikanlagen erfolgt zwangsläufig ein Wandel von der in Deutschland gegenwärtigen grundlastorientierten Energieerzeugung mittels Großkraftwerken wie Kern- und Steinkohlekraftwerke hin zu einer grundlastfreien Erzeugung.

Zusätzlich führt der Ausbau der Energiegewinnung aus erneuerbaren Energien als auch der Rückgang konventioneller Kraftwerkskapazitäten zu einer veränderten geographischen Verteilung der Energieerzeugung, vor allem aber zu einer Verlagerung der Einspeisungen auf Spannungsebenen unterhalb des Übertragungsnetzes, d.h. zu Einspeisungen in die Spannungsebenen des Verteilnetzes. Diese Änderung der Einspeisesituation wird auch eine Veränderung der Leistungsflüsse nach sich ziehen und somit Auswirkungen auf die Struktur von Übertragungs- und Verteilnetzen haben. Im Bereich der Systemdienstleistungen ist aufgrund der abnehmenden Anzahl konventioneller Kraftwerke sowie dem steigenden Anteil volatiler, fluktuierender dezentraler Energieumwandlungsanlagen (DEA) eine Neuausrichtung der Netzregelung zwingend erforderlich.

Die heutige Frequenzregelung beruht auf einer Drehzahlreglung der Generatoren (überwiegend Synchronmotoren) der Großkraftwerke, wobei die rotierenden Massen als Kurzzeitenergiespeicher dienen. Durch die Abnahme konventioneller Erzeugungskapazitäten und folgemäßig durch die Abnahme der rotierenden Massen bzw. der Momentanreserve wird sich die Sensitivität des Netzes gegenüber Störungen erhöhen.

Die Veränderungen des Kraftwerksparks haben auch Auswirkungen auf die Spannungshaltung. Zum einen werden die notwendigen Streckenlängen für den Leistungstransfer und somit auch der Blindleistungsbedarf des Netzes steigen, zum anderen stehen Großkraftwerke regional nicht mehr zur Verfügung, um die Blindleistung bereitzustellen. Dieser Sachverhalt ist durch die Netzengpasssituation infolge der Abschaltung der Kernenergieblöcke im Raum Hamburg und Süddeutschland belegbar.

Das heutige Konzept zur Frequenz- und Spannungshaltung verfolgt einen zentralistischen Ansatz, der vorwiegend auf dem Einsatz großer Kraftwerksblöcke basiert, die in die Übertragungsnetzebene einspeisen. Da diese i. d. R. fossilen Kraftwerksblöcke jedoch zunehmend durch DEA substituiert werden, stehen sie nicht mehr für die Frequenz- und Spannungshaltung zur Verfügung. Es muss daher nach einer anderen Lösung gesucht werden.

Die zunehmende dezentrale Erzeugung weist eine fluktuierende Einspeisecharakteristik auf, die heute durch den Einsatz von Regelleistung auf Übertragungsnetzebene ausgeglichen werden muss. Mit steigender Einspeisung aus den dezentralen Energieumwandlungsanlagen ist mit einem vermehrten Einsatz von Regelleistung zu rechnen, welche nach dem heutigen Konzept durch netzstützende Großkraftwerke, wie Braunkohlekraftwerke, bereitgestellt werden muss und folglich das Übertragungsnetz zusätzlich belastet. Dieser Ansatz deckt sich jedoch nicht mit dem Ziel einer CO₂-Reduzierung (Dekarbonisierung) der Energieversorgung.

Hinzu kommt, dass das Freihalten von Kapazitäten im Übertragungsnetz für die Erbringung von Regelleistung Auswirkungen auf die maximal zur Verfügung stehende Kapazität zur Übertragung hat. So würde eine lokale Bereitstellung von Regelleistung die Ausnutzung vorhandener Kapazitäten erhöhen und damit auch ggf. Netzausbaumaßnahmen reduzieren.

Durch die erhöhte Übertragung von Leistung über räumliche Distanzen wird der Blindleistungsbedarf steigen. Auch dieser wird derzeit durch die konventionellen Kraftwerke gedeckt. Deren Wegfall hat folglich auch hier eine Deckungslücke in der Bereitstellung von Blindleistung zur Folge.

Es bestehen Konzepte zur Blindleistungsregelung von dezentralen Energieumwandlungsanlagen. Diese werden jedoch vorwiegend für die Vermeidung von spannungsbedingten Netzausbaumaßnahmen im Verteilnetz eingesetzt. Eine Möglichkeit, Blindleistung auf Verteilnetzebene für das Übertragungsnetz bereitzustellen, wird heutzutage nicht verfolgt.

In US 2009/0216387 A1 wird eine Netzfrequenzregelung beschrieben, in der steuerbare Endverbraucher zur Frequenzhaltung beitragen.

Die Abstimmung zwischen den zukünftigen Aufgaben der Übertragungs- und Verteilnetzbetreiber unter den sich ergebenden veränderten Anforderungen an das Energiesystem der Zukunft sind heute weitestgehend nicht definiert. Ein rascher Ausbau dezentraler Energieumwandlungsanlagen auf Verteilnetzebene führt jedoch auch zu einer wachsenden Systemverantwortung der Verteilnetzbetreiber, so dass neue Konzepte für eine Koordination von Übertragungsnetz und Verteilnetz zu entwickeln sind.
Zukünftig werden folglich Übertragungsnetze höher ausgelastet werden, wobei netzstützende Kraftwerke wegfallen, die Regelleistung (Wirkleistung) und Blindleistung bereitstellen (Systemdienstleistungen). Ein Teil dieser Systemdienstleistungen soll zukünftig durch das Verteilnetz erbracht werden, was heute nicht der Fall ist.
Es ist daher Aufgabe der vorliegenden Erfindung, einen neuen Ansatz vorzuschlagen, wie die Bereitstellung der Systemdienstleistungen aus einem
Verteilnetz heraus ermöglicht werden kann, so dass das Übertragungsnetz von diesen Aufgaben entlastet wird.
Diese Aufgabe wird durch ein System mit den Merkmalen des Anspruchs 1, sowie durch ein Verfahren mit den Merkmalen des Anspruchs 11 gelöst. Vorteilhafte Weiterbildungen der Erfindung sind in den jeweiligen Unteransprüchen angegeben.
Erfindungsgemäß wird ein System zur Regelung der Spannungshaltung und/oder der Frequenzhaltung in einem Energieversorgungssystem, das ein Übertragungsnetz einer ersten Spannungsebene und zumindest ein damit über eine Umspanneinrichtung gekoppeltes Verteilnetz einer zweiten, gegenüber der ersten Spannungsebene niedrigeren Spannungsebene aufweist, wobei das Verteilnetz mit einer Anzahl regelbarer Netzteilnehmer verbunden ist, und das System umfasst:
- erste Messmittel zur Erfassung der Frequenz oder Wirkleistung und/oder zur Erfassung der Spannung oder Blindleistung an einem Knoten des Übertragungsnetzes,
- zweite Messmittel zur Erfassung von Werten elektrischer Netzzustandsgrößen an wenigstens einem Knoten des Verteilnetzes sowie
- dritte Messmittel zur Erfassung von Werten elektrischer Teilnehmerzustandsgrößen der Netzteilnehmer,
- eine Bewertungsinstanz zur Netzzustandsbewertung, die über erste Kommunikationsmittel zumindest indirekt mit den zweiten und dritten Messmitteln verbunden ist und die dazu eingerichtet ist, aus den erfassten Werten der Netz- und Teilnehmerzustandsgrößen die Verfügbarkeit eines jeden Netzteilnehmer für eine zusätzliche Leistungsaufnahme und/ oder Leistungsabgabe zu ermitteln und als Zustandsmatrix bereit zu stellen, und
- eine Regelungseinheit umfassend mindestens einen Differenzbildner zur Bildung einer Differenz aus einer vorgebbaren Sollgröße und der erfassten Frequenz oder Wirkleistung und/ oder Spannung oder Blindleistung, weiterhin umfassend mindestens ein Regelmodul, dem die gebildete Differenz und die Zustandsmatrix zuleitbar sind, wobei das Regelmodul dazu eingerichtet ist, aus der Differenz und der Zustandsmatrix diejenigen Netzteilnehmer zu identifizieren, die eine Maßnahme zur Kompensation der Differenz ausführen können, und für zumindest einen dieser Netzteilnehmer eine Leistungsvorgabe, insbesondere eine Leistungsänderungsvorgabe, derart festzulegen, dass die Differenz zu Null kompensierbar ist, wobei die Regelungseinheit über zweite Kommunikationsmittel zumindest indirekt mit den Netzteilnehmern zur Übertragung der Leistungsvorgabe, insbesondere der Leistungsänderungsvorgabe, verbunden ist.

Die Regelungseinheit sorgt dafür, dass sich in Abhängigkeit der Zustandsmatrix als eine Eingangsgröße und der Frequenzabweichung als weitere Eingangsgröße ein definiertes Betriebsverhalten des Verteilnetzes für die Wirkleistung ergibt und/ oder, dass sich in Abhängigkeit der Zustandsmatrix als eine Eingangsgröße und der Spannungsabweichung als weitere Eingangsgröße ein definiertes Betriebsverhalten des Verteilnetzes für die Blindleistung ergibt, so dass die jeweilige Sollwertabweichung ausgeregelt wird. Die Regelungseinheit kann dabei ereignisorientiert bestimmen, d.h. in Abhängigkeit der aktuellen Netzsituation entscheiden, welche Maßnahme zur Frequenz- und/ oder Spannungshaltung bei wenigstens einem, insbesondere aber bei einer Vielzahl von Netzteilnehmern eingesetzt werden soll bzw. sollen. Maßnahmen sind beispielsweise das Herauf- oder Abregeln dezentraler Energieumwandlungsanlagen, beispielsweise Windenergie- und Photovolatikanlagen, das Füllen oder Entladen von Speichern, beispielsweise Batteriespeichern, und das Steuern von Lasten im Verteilnetz. Vorzugsweise kann auch eine Priorisierung der Maßnahmen durch den Betreiber der Anlage individuell festgelegt werden. So kann auch auf eine Maßnahme wie z.B. der Einsatz steuerbarer Lasten gänzlich verzichtet werden. Speicher können durch die Netzkopplung mittels Umrichter sowohl den Wirkleistungs- als auch den Blindleistungsbedarf einstellen.

Das erfindungsgemäße System kann entweder dazu eingerichtet sein, nur die Spannungshaltung zu regeln, in diesem Fall wird zumindest eine der Größen Spannung und Blindleistung an dem Knoten des Übertragungsnetzes erfasst. Zusätzlich oder alternativ kann das System dazu eingerichtet sein, nur die Frequenzhaltung zu regeln, in diesem Fall wird zumindest eine der Größen Frequenz und Wirkleistung an dem Knoten des Übertragungsnetzes erfasst. Gemäß einer weiteren Ausführungsvariante kann das System zur Regelung sowohl der Frequenzhaltung als auch der Spannungshaltung eingerichtet sein. Hierfür ist dann entweder die Frequenz oder die Wirkleistung einerseits und entweder die Spannung oder die Blindleistung andererseits zu erfassen. Entsprechend sind die ersten Messmittel je nach Ausbildung des Systems eingerichtet, die Frequenz oder Wirkleistung zu erfassen, und/oder die Spannung oder Blindleistung zu erfassen.

Dies bedeutet ferner, dass das System mit einem Differenzbildner auskommt, sofern nur die Frequenzhaltung oder nur die Spannungshaltung geregelt werden soll. In diesem Fall ist die Sollgröße je nach verwendetem Regelzweck entweder ein Frequenzsollwert oder ein Wirkleistungssollwert oder ein Spannungssollwert oder ein Blindleistungssollwert. Sollen sowohl die Spannungshaltung als auch die Frequenzhaltung geregelt werden, sind zwei Differenzbildner vorzusehen, von denen einer für die Regelung der Frequenzhaltung die Differenz der gemessenen Frequenz und einer Sollfrequenz oder von der gemessenen Wirkleistung und einer Sollwirkleistung ermittelt und der andere Differenzbildner für die Regelung der Spannungshaltung die Differenz der gemessenen Spannung und einer Sollspannung oder von der gemessenen Blindleistung und einer Sollblindleistung ermittelt.

Die Bewertungsinstanz verarbeitet einerseits Zustandsdaten des Verteilnetzes, d.h. die erfassten Werte der Netzzustandsgrößen, sowie andererseits Zustandsdaten der Netzteilnehmer, d.h. die erfassten Werte der Teilnehmerzustandsgrößen vorzugsweise eines jeden geregelten Speichers, einer jeden gesteuerten Last und einer jeden geregelten dezentralen Energieumwandlungsanlage (DEA). Dabei bewertet sie die Verfügbarkeit eines jeden Netzteilnehmers, d.h. jedes Speichers, jeder gesteuerten Last und jeder DEA daraufhin, ob eine Änderung seiner/ ihrer Wirk-und/ oder Blindleistungsaufnahme oder -einspeisung einerseits technisch möglich und vorzugsweise auch andererseits im Rahmen vorgebbarer Netzrestriktionen wie beispielsweise Leistungsgrenzen insbesondere aus Sicherheits- oder Versorgungsgründen zulässig ist. Beispielsweise kann eine potentielle thermische Überlastung als Restriktion verwendet werden. In diesem genannten Fall kann dieser Netzteilnehmer für die Kompensation der Differenz trotz seiner Verfügbarkeit unberücksichtigt bleiben.

Die Ausregelung der Abweichung der Frequenz und/ oder Spannung vom jeweiligen Sollwert erfolgt dergestalt, dass sowohl kurzfristige Fluktuationen im Verteilnetz, beispielsweise hervorgerufen durch das An- oder Abschalten einer DEA, als auch Last- und Einpeiseereignisse im Übertragungsnetz ausgeglichen werden können.

Vorzugsweise umfasst die Anzahl der Netzteilnehmer wenigstens eine regelbare Last, wenigstens einen regelbaren Energiespeicher und wenigstens eine dezentrale, in das Verteilnetz einspeisende regelbare Energieumwandlungsanlage. Insbesondere können jeweils eine Vielzahl dieser Netzteilnehmer vorhanden sein, die dann mit einer Vielzahl einzelner, vergleichsweise kleiner Maßnahmen zur Frequenz- und/ oder Spannungshaltung beitragen.

Vorzugsweise kann das Regelmodul dazu eingerichtet sein, nicht nur für einen einzelnen sondern für jeden der identifizierten Netzteilnehmer eine Leistungsvorgabe, insbesondere eine Leistungsänderungsvorgabe festzulegen.

Es ist von Vorteil, wenn die ersten Messmittel oberspannungsseitig der Umspanneinrichtung angeordnet sind, die Frequenz oder Wirkleistung und/ oder Spannung oder Blindleistung an der Oberspannungsseite der Umspanneinrichtung erfasst wird/ werden. Dieser Netzknoten des Übertragungsnetzes stellt die Schnittstelle zum Verteilnetz dar, so dass hier der Leistungsfluss zwischen Übertragungsnetz und Verteilnetz ermittelt werden kann.

Um von dem gesamten Verteilnetz eine Netzzustandsanalyse vornehmen zu können, können die zweiten Messmittel bevorzugt an mehreren, insbesondere an einer Vielzahl an Knoten des Verteilnetzes zur jeweiligen Erfassung von Werten lokaler elektrischer Netzzustandsgrößen des Verteilnetzes angeordnet sein. Entsprechend werden dann elektrische Netzzustandsgrößen lokal an einer Vielzahl von Knoten erfasst und stehen zur Auswertung durch die Bewertungsinstanz zur Verfügung.

Als Netzzustandsgröße kann beispielsweise eine von einem Knoten gelieferte oder in einen Knoten eingespeiste Wirkleistung P_{VN}, eine von einem Knoten gelieferte oder in einen Knoten eingespeiste Blindleistung Q_{VN}, die Netzfrequenz f_{VN} und/ oder die Netzspannung U_{VN} des Verteilnetzes an einem Knoten verwendet werden. Alternativ oder zusätzlich können als Netzzustandsgrößen mehrere Ströme verwendet werden, die jeweils in einen Knoten fließen. Dies ermöglicht es, eine Netzzustandsbewertung über diese Ströme und eine bekannte Netztopologie durchzuführen.

Vorzugsweise ist in der Zustandsmatrix für jeden Netzteilnehmer angegeben, ob dieser aus Sicht des Verteilnetzes für eine Wirkleistungserhöhung oder eine Wirkleistungsreduzierung und/ oder für eine Blindleistungserhöhung oder eine Blindleistungsreduzierung aktuell zur Verfügung steht. Diese Verfügbarkeit beschreibt seine Eignung aktuell zusätzliche Wirk- und/ oder Blindleistung in das Verteilnetz zu liefern und/ oder Wirk- und/ oder Blindleistung aus dem Verteilnetz zu ziehen. Diese Verfügbarkeit kann in Form einer binären Angabe, beispielweise durch "0" und "1" erfolgen.

Gemäß einer bevorzugten Ausführungsvariante kann die Bewertungsinstanz dazu eingerichtet sein, die Ermittlung der Verfügbarkeit der Netzteilnehmer aus den erfassten Werten der Netz- und Teilnehmerzustandsgrößen mittels des Newton-Raphsons-Verfahrens durchzuführen. Alternativ kann die Netzzustandsbewertung über Ströme und die bekannte Netztopologie erfolgen.

Das Regelmodul kann einen Fallunterscheider zur Bestimmung aufweisen, ob die Differenz positiv oder negativ ist, wobei das Regelmodul bevorzugt dazu eingerichtet sein kann,
- im Falle einer positiven Differenz der Frequenz oder Wirkleistung diejenigen Netzteilnehmer aus der Zustandsmatrix zu identifizieren, die für eine Wirkleistungsreduzierung aktuell zur Verfügung stehen, und
- im Falle einer negativen Differenz der Frequenz oder Wirkleistung diejenigen Netzteilnehmer aus der Zustandsmatrix zu identifizieren, die für eine Wirkleistungserhöhung aktuell zur Verfügung stehen,
   und/oder
- im Falle einer positiven Differenz der Spannung oder Blindleistung diejenigen Netzteilnehmer aus der Zustandsmatrix zu identifizieren, die für eine Blindleistungsreduzierung aktuell zur Verfügung stehen,
- im Falle einer negativen Differenz der Spannung oder Blindleistung diejenigen Netzteilnehmer aus der Zustandsmatrix zu identifizieren, die für eine Blindleistungserhöhung aktuell zur Verfügung stehen.

Des Weiteren kann die Regelungseinheit eine vorgebbare Präferenzmatrix umfassen, in der diejenigen Netzteilnehmer gekennzeichnet sind, die für die Ausführung der Maßnahme zu präferieren sind. Die Regelungseinheit kann zudem eine Entscheidungsinstanz aufweisen, die dazu eingerichtet ist, aus den identifizierten Netzteilnehmern diejenigen zu selektieren, die gemäß der Präferenzmatrix zu präferieren sind.

Erfindungsgemäß wird ferner ein Verfahren zur Regelung der Spannungshaltung und/oder der Frequenzhaltung in dem Energieversorgungssystem vorgeschlagen, bei dem
- erste Messmittel die Frequenz oder Wirkleistung und/oder die Spannung oder Blindleistung an einem Knoten des Übertragungsnetzes erfassen,
- zweite Messmittel Werte elektrischer Netzzustandsgrößen an wenigstens einem Knoten des Verteilnetzes erfassen, sowie
- dritte Messmittel Werte elektrischer Teilnehmerzustandsgrößen Netzteilnehmer erfassen, wobei
- eine Bewertungsinstanz eine Netzzustandsbewertung durchführt und aus den erfassten Werten der Netz- und Teilnehmerzustandsgrößen die Verfügbarkeit eines jeden Netzteilnehmers für eine zusätzliche Leistungsaufnahme und/ oder Leistungsabgabe ermittelt und als Zustandsmatrix bereitstellt, und
- wenigstens ein Differenzbildner einer Regelungseinheit eine Differenz aus einer vorgebbaren Sollgröße und der erfassten Frequenz oder Wirkleistung und/ oder Spannung oder Blindleistung ermittelt,
- die gebildete Differenz und die Zustandsmatrix einem Regelmodul zur Verfügung gestellt sind, das aus der Differenz und der Zustandsmatrix diejenigen Netzteilnehmer identifiziert, die eine Maßnahme zur Kompensation der Differenz ausführen können,
- wobei das Regelmodul für zumindest einen dieser Netzteilnehmer eine Leistungsvorgabe, insbesondere eine Leistungsänderungsvorgabe, derart festlegt, dass die Differenz zu Null kompensierbar ist, und
- die Leistungsvorgabe, insbesondere der Leistungsänderungsvorgabe, von der Regelungseinheit über zweite Kommunikationsmittel zumindest indirekt zu den Netzteilnehmern übertragen und von diesen eingestellt wird.

Die Besonderheit des erfindungsgemäßen Systems besteht darin, ein definiertes Wirk- und Blindleistungsverhaltens eines Verteilnetzes einzustellen, um somit zur Frequenz- und Spannungshaltung beizutragen. Auf diese Weise wird Regelleistung zur Frequenzhaltung und Blindleistung zur Spannungshaltung dezentral bereitgestellt so dass der Einsatz konventioneller Erzeuger reduziert bzw. vermieden werden kann.

Das erfindungsgemäße Verfahren kombiniert unterschiedliche Maßnahmen aus Speichereinsatz, der Ausnutzung steuerbarer Lasten und der Einsatz von DEA aus dem Verteilnetz unter Berücksichtigung von Netzrestriktionen. Damit bildet das erfindungsgemäße System ein neues Bindeglied zwischen Übertragungs- und Verteilnetz zur Erbringung von Systemdienstleistungen zur Frequenz- und Spannungshaltung auf Verteilnetzebene, welches derzeit so in der klassischen Energieversorgung nicht existiert.

Der dezentrale Ansatz des konzipierten Systems zielt auf eine effiziente, ökologische und ökonomische Lösung für das gesamte Energieversorgungssystem der Zukunft ab, indem ein definiertes Wirk-und Blindleistungsverhalten eines Verteilnetzes an der Schnittstelle zum Übertragungsnetz eingestellt wird, um zur Frequenz- und Spannungshaltung beizutragen. Besondere Merkmale und Vorteile der Erfindung sind:
- eine lokale Bereitstellung eines Beitrages zur Frequenzhaltung für das Übertragungs- und Verteilnetz
- eine Erbringung von Momentanreserve,
- ein Einsatz von Primär- und Sekundär- und Minutenregelleistung durch Großkraftwerke kann auf ein Minimum reduziert werden
- eine lokale Bereitstellung eines Beitrages zur Spannungshaltung für das Übertragungs- und Verteilnetz
- eine Umrüstung von alten Kraftwerksstandorten zum reinen Phasenschieberbetrieb ist nicht mehr nötig
- der CO2-Austoß wird durch dezentrale Erbringung von Systemdienstleistungen reduziert bzw. vermieden
- das System ermöglicht es, Netzeinsparungen im Übertragungsnetz zu erzielen
- ein Ausgleich bzw. erzeugungsnahe Glättung fluktuierender Einspeisungen durch dezentrale Koordination von Einspeisungen, Lasten und Speichertechnologien
- ein Wegfall von speziellen und kostenintensiven Einzelfalllösungen durch ganzheitliche Betrachtung der Spannungs- und Frequenzhaltung.

Da durch das definierte Wirk- und Blindleistungsverhalten die Spannungs- und Frequenzhaltung vollständig auf Verteilnetzebene erbracht werden kann, ist auch ein Energieversorgungssystem aus 100 % erneuerbaren Energien realisierbar. Ein sicherer und stabiler Betrieb des elektrischen Netzes ist trotzdem gewährleistet.

Weitere Merkmale und Vorteile des erfindungsgemäßen Systems und des Verfahrens werden nachfolgend anhand eines Ausführungsbeispiels und der beigefügten Figuren erläutert:
- Figur 1:: herkömmliches Energieversorgungssystem mit Spannungshaltung und der Frequenzhaltung auf Übertragungsnetzebene
- Figur 2:: schematische Darstellung eines Energieversorgungssystems mit integriertem System zur Regelung der Spannungshaltung und der Frequenzhaltung auf Verteilnetzebene
- Figur 3:: Detaildarstellung der Funktionseinheiten der Regelungseinheit

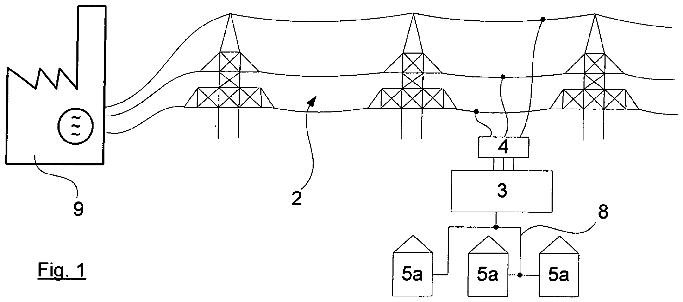

Figur 1 zeigt ein herkömmliches Energieversorgungssystem 1. Es umfasst ein Übertragungsnetz 2 einer ersten Spannungsebene und ein Verteilnetz 3 einer zweiten Spannungsebene, wobei das Übertragungsnetz 2 und das Verteilnetz 3 über eine Umspanneinrichtung 4 gekoppelt sind. Ein Kraftwerk 9 speist elektrische Energie in das Übertragungsnetz 2 hinein, welches diese über sehr große Distanzen auf technischer Höchstspannungsebene (HöS), d.h. beispielsweise bei 220 kV oder 380 kV überträgt. Das Verteilnetz 3 erstreckt sich gegenüber dem Übertragungsnetz 2 eher geografisch lokal und verteilt elektrische Energie zu Verbrauchern 5a auf einer gegenüber der ersten Spannungsebene niedrigeren Spannungsebene, hier beispielhaft auf technischer Hochspannungsebene (HS), d.h. beispielsweise bei 110 kV. Die Umspanneinrichtung 4 kann von wenigstens einem Transformator, insbesondere einem HöS/HS-Transformator gebildet sein. Es sei angemerkt, dass in der Realität mehrere oder sogar eine Vielzahl lokaler Verteilnetze 3 an das Übertragungsnetz 2 verbunden sein können. Die Verbraucher 5a sind in der Regel nicht regelbar. Die Spannungshaltung und die Frequenzhaltung erfolgt auf Übertragungsnetzebene durch Regelung der von dem Kraftwerk 9 zur Verfügung gestellten Wirkleistung und Blindleistung, wie dies im einleitenden Teil beschrieben ist.

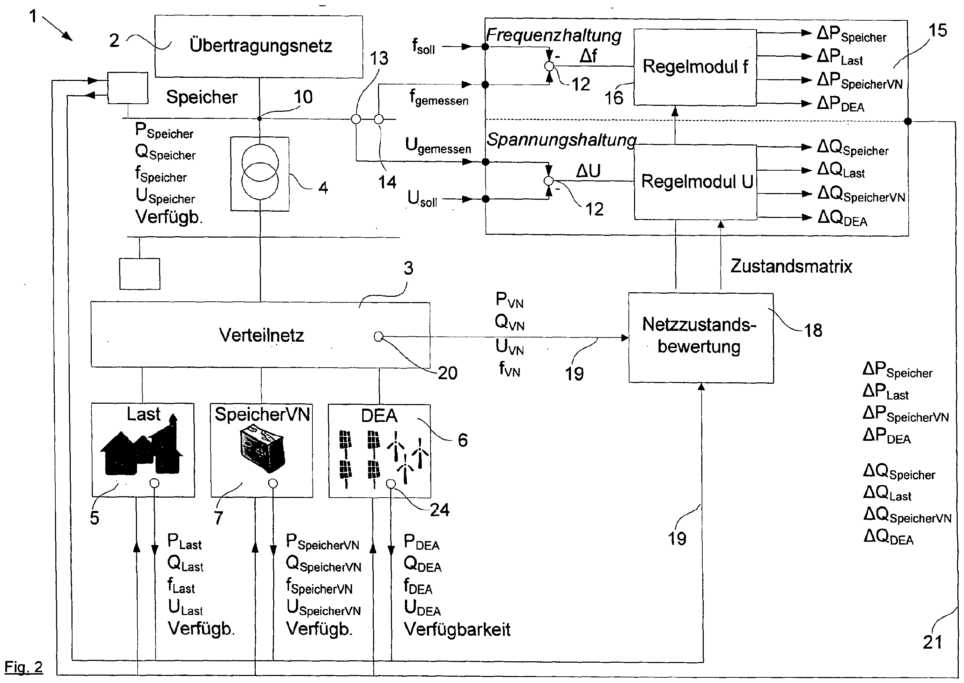

Ein erfindungsgemäßes System zur Regelung der Spannungshaltung und/oder der Frequenzhaltung in einem Energieversorgungssystem 1 ist schematisch in Figur 2 rein beispielhaft dargestellt. Gleiche Bezugsziffern und Bezugszeichen bezeichnen dieselben Elemente, so dass hinsichtlich des strukturellen Aufbaus des Energieversorgungssystems 1 auf die Erläuterungen zu Figur 1 verwiesen wird.

In der erfindungsgemäßen Weiterbildung des herkömmlichen Energieversorgungssystems 1 gemäß Figur 2 ist das Verteilnetz 3 mit einer Anzahl regelbarer Netzteilnehmer 5, 6, 7 verbunden. Insbesondere sind eine Vielzahl solcher Netzteilnehmer 5, 6, 7 vorhanden, die über entsprechende Leitungen 8 mit dem Verteilnetz 3 verbunden sind. Das Verteilnetz 3 mitsamt der angeschlossenen Netzteilnehmer 5, 6, 7 und Anschlussleitungen 8 bildet ein Verteilnetzwerk.

Die Netzteilnehmer 5, 6, 7 können hier verschiedener Art sein und sind nicht nur durch nicht regelbare Energieverbraucher 5a gebildet, wie dies in Figur 1 der Fall ist. Vielmehr sind die Netzteilnehmer 5, 6, 7 regelbare Lasten 5, dezentrale Energieumwandlungsanlagen 6 und/ oder Energiespeicher 7, wie Kondensatorbänke oder auf- und entladbare Batterien. Von den genannten Arten an Netzteilnehmern können jeweils insbesondere eine Vielzahl vorhanden und mit dem Verteilnetz 3 verbunden sein. In Figur 1 ist jeweils stellvertretend eine regelbare Last 5, ein regelbarer Energiespeicher 7 und eine regelbare DEA 6 dargestellt. Der Anschluss eines Netzteilnehmers 5, 6, 7 an das Verteilnetz 3 erfolgt mittels eines nicht dargestellten Umrichters, der der Einfachheit halber als Teil des entsprechenden Netzteilnehmers betrachtet wird. Der Umrichter kann steuerbare leistungselektronische Halbleiterschalter wie IGBTs, IGCT usw. besitzen, mittels welchen die Leistungsaufnahme oder Leistungsabgabe des entsprechenden Netzteilnehmers 5, 6, 7 in bekannter Art und Weise eingestellt werden kann.

Das erfindungsgemäße System umfasst erste Messmittel 13 zur Erfassung, insbesondere Messung der Frequenz f_{gemessen} an wenigstens einem Knoten des Übertragungsnetzes 2 oder erste Messmittel 14 zur Erfassung, insbesondere Messung der Spannung U_{gemessen} an wenigstens einem Knoten des Übertragungsnetzes 2. Anstelle der Frequenz f_{gemessen} kann auch die Wirkleistung erfasst, insbesondere gemessen werden, anstelle der Spannung U_{gemessen} kann die Blindleistung erfasst, insbesondere gemessen werden. Die Erfassung der Frequenz f_{gemessen} oder der Wirkleistung ist für die Frequenzhaltung, die Erfassung der Spannung oder der Blindleistung ist für die Spannungshaltung erforderlich. Alternativ zu einer Messung kann auch eine Berechnung der genannten Größen, insbesondere der Frequenz, Wirk- und/ oder Blindleistung aus elektrischen Größen erfolgen, wie dies hinreichend bekannt ist. Da die Frequenzhaltung und die Spannungshaltung grundsätzlich unabhängig voneinander geregelt werden können, ist es nicht zwingend, sowohl die Frequenz f_{gemessen} oder Wirkleistung als auch die Spannung U_{gemessen} oder Blindleistung zu messen. Sofern jedoch die nach dem herkömmlichen Stand der Technik auf Übertragungsnetzebene erbrachten Systemdienstleistungen vollständig auf die Verteilnetzebene transferiert werden sollen, sind die Messungen beider Größen erforderlich.

Die Erfassung erfolgt vorzugsweise an einem Knoten des Übertragungsnetzes 2, an dem es mit der Umspanneinrichtung 4 verbunden ist, insbesondere an einer Sammelschiene an der Oberspannungsseite 10 des Transformators 4. Insbesondere kann hier die vom Übertragungsnetz 2 in das Verteilnetz 3 respektive vom Verteilnetz 3 in das Übertragungsnetz 2 aktuell übertragene Wirk- und Blindleistung ermittelt werden.

Das erfindungsgemäße System umfasst des Weiteren zweite Messmittel 20 zur Erfassung von Werten elektrischer Netzzustandsgrößen P_{VN}, Q_{VN}, U_{VN}, f_{VN} an wenigstens einem Knoten des Verteilnetzes 3. Derartige Netzzustandsgrößen sind insbesondere die Wirkleistung P_{VN} im Verteilnetz 3, die Blindleistung Q_{VN} im Verteilnetz 3, sowie die Spannung U_{VN}, und die Frequenz f_{VN} im Verteilnetz 3. Wenngleich in der Figur 2 der Einfachheit halber nur ein einziger Messpunkt dargestellt ist, wird zweckmäßigerweise mit den zweiten Messmitteln 20 nicht nur an einem einzigen Knoten gemessen. Vielmehr ist es für eine umfassende Bewertung des Netzzustands des Gesamtnetzes zweckmäßig, an mehreren insbesondere vielen Knoten des Verteilnetzes 2 lokal die Spannung, Frequenz, Wirkleistung und/ oder Blindleistung zu ermitteln, d.h. zu messen oder zu berechnen.

Ferner sind dritte Messmittel 24 an oder in jedem Netzteilnehmer 5, 6, 7, insbesondere in dem Umrichter des entsprechenden Netzteilnehmers 5, 6, 7, vorhanden, die der Erfassung von Ist-Zustandswerten elektrischer Teilnehmerzustandsgrößen der Netzteilnehmer 5, 6, 7 dienen. Welche Teilnehmerzustandsgrößen erfasst werden oder zu erfassen sind, richtet sich nach der Art des Netzteilnehmers 5, 6, 7. Derartige Teilnehmerzustandsgrößen sind insbesondere bei einer Last 5 die von der Last 5 aktuell aufgenommene Wirkleistung P_{Last}, Blindleistung Q_{Last} und ihre Verfügbarkeit. Die Verfügbarkeit meint, ob eine Anlage 5, 6, 7 in Betrieb ist. Dies ist allerdings als Eingangsgröße für eine Netzzustandsbewertung erforderlich. Die Zustandsmatrix bestimmt, inwiefern zusätzlich durch eine DEA, Last, etc. Wirkleistung P und/oder Blindleistung Q bereitgestellt werden kann. Im Falle eines Speichers 7 sind die Teilnehmerzustandsgrößen insbesondere die von dem Speicher 7 aktuell aufgenommene oder abgegeben Wirkleistung P_{SpeicherVN} sowie die Verfügbarkeit des Speichers 7. Und im Falle einer DEA 6 sind die Teilnehmerzustandsgrößen insbesondere die von einer DEA 6 aktuell abgegebene Wirkleistung P_{DEA}, Blindleistung Q_{DEA}, ihre Spannung U_{DEA}, ihre Frequenz f_{DEA} sowie die Verfügbarkeit der DEA 6. Als "Verfügbarkeit" wird in diesem Zusammenhang eine binäre Information verstanden, die angibt, ob der entsprechende Netzteilnehmer 5, 6, 7 am Verteilnetz 2 angeschlossen ist oder nicht.

Des Weiteren umfasst das erfindungsgemäße System eine Bewertungsinstanz 18, die auf der Grundlage der aktuellen Werte der erfassten Teilnehmerzustandsdaten und Netzzustandsgrößen eine Netzzustandsbewertung durchführt. Hierfür ist die Bewertungsinstanz 18 über Kommunikationsmittel 19 mit den zweiten und dritten Messmitteln 20, 24 verbunden. Die Kommunikationsmittel 19 können durch einzelne Messleitungen, durch einen Bus beispielsweise ein Netzwerk und/ oder durch eine Funkübertragungseinrichtung gebildet sein. Nachfolgend wird allgemein von Messleitungen 19 gesprochen. Alternativ zu einer direkten Übertragung der erfassten Werte der ersten, zweiten und/ oder dritten Messmittel 13, 14, 20, 24 kann auch eine indirekte Übertragung der Messwerte an die Bewertungsinstanz 18 erfolgen, in dem die erfassten Werte über ein Netzwerk in einer Cloud gespeichert werden, die von der Bewertungsinstanz 18 aus der Cloud abgerufen werden. Die Bewertungsinstanz 18 ist dazu eingerichtet, aus den erfassten Ist-Werten der Netz- und Teilnehmerzustandsgrößen für jeden Teilnehmer die Fähigkeit zur Wirk- und/oder Blindleistungsänderung zu bestimmen und als Zustandsmatrix bereit zu stellen.

Die Bereitstellung erfolgt an eine Regelungseinheit 15, die eine Regelung zur Frequenzhaltung oder zur Spannungshaltung, oder in einer bevorzugten Ausführungsvariante jeweils eine Regelung zur Frequenz- und Spannungshaltung umfasst. Letztere ist in Figur 2 dargestellt. Jede der Regelungen umfasst einen Differenzbildner 12 zur jeweiligen Bildung einer Abweichung Δf, ΔU aus der erfassten Frequenz f_{gemessen} bzw. der erfassten Spannung U_{gemessen} und einer entsprechenden vorgebbaren Sollgröße f_{Soll}, U_{Soll}. Die jeweilige Frequenzabweichung Δf bzw. Spannungsabweichung ΔU bildet somit eine Sollwertabweichung. Wie bereits oben angemerkt, kann anstelle der Frequenz die Wirkleistung erfasst werden. In diesem Falle würde eine Wirkleistungsdifferenz aus der erfassten Wirkleistung und einer Sollwirkleistung durch den entsprechenden Differenzbildner 12 bestimmt werden. In entsprechender Weise kann anstelle der Spannung die Blindleistung erfasst werden. In diesem Falle würde eine Blindleistungsdifferenz aus der erfassten Blindleistung und einer Sollblindleistung durch den entsprechenden Differenzbildner 12 bestimmt werden. Für den gewählten Messpunkt, d.h. hier beispielhaft an der Oberspannungsseite 10 des HöS/HS-Transformators 4 kann der Betreiber des erfindungsgemäßen Systems den Frequenzsollwert f_{Soll} und/ oder den Spannungssollwert Uₛₒₗₗ individuell vorgeben, insbesondere einstellen. Alternativ kann ein Wirkleistungssollwert bzw. Blindleistungssollwert individuell vorgegeben werden.

Die Regelungseinheit 15 umfasst gemäß Figur 2 ferner jeweils ein Regelmodul 16 für die Frequenzhaltung und ein Regelmodel 17 für die Spannungshaltung. Es sei angemerkt, dass es auch hier nicht erforderlich ist, dass beide Module 16 17 gemeinsam vorhanden sind. Je nach Ziel und Einsatzzweck des erfindungsgemäßen Systems genügt es, entweder ein Regelmodul 16 für die Frequenzhaltung oder ein Regelmodul 17 für die Spannungshaltung vorzusehen.

Dem ersten Regelmodul 16 für die Frequenzhaltung ist bzw. wird die bestimmte Frequenzdifferenz Δf, dem zweiten Regelmodul 17 für die Spannungshaltung wird die bestimmte Spannungsdifferenz ΔU zugeführt. Beiden Regelmodulen 16, 17 ist die von der Bewertungsinstanz 18 ermittelte Zustandsmatrix zugeführt.

Die Regelmodule 16, 17 sind jeweils dazu eingerichtet, aus der zugeführten Differenz Δf, ΔU und der Zustandsmatrix für wenigstens einen der Netzteilnehmer 5, 6, 7 eine Leistungsänderungsvorgabe derart festzulegen, dass die jeweilige Differenz Δf, ΔU zu Null kompensierbar ist. Anstelle einer Leistungsänderungsvorgabe, d.h. einer auf den aktuellen Leistungswert bezogenen relativen Leistungsvorgabe, kann auch eine absolute Leistungsvorgabe erfolgen. Im Falle der Frequenzhaltung ist die Leistungsvorgabe eine Wirkleistungsvorgabe für zumindest einen der Netzteilnehmer 5, 6, 7, im Falle der Spannungshaltung eine Blindleistungsvorgabe für zumindest einen der Netzteilnehmer 5, 6, 7.

Das für die Frequenzhaltung zuständige erste Regelmodul 16 legt demgemäß beispielsweise eine Wirkleistungsänderungsvorgabe ΔP_{Last} für eine regelbare Last 5 und/oder eine Wirkleistungsänderungsvorgabe ΔP_{Speicher} für einen regelbaren Speicher 7 und/ oder eine Wirkleistungsänderungsvorgabe ΔP_{DEA} für eine regelbare DEA 6 fest. Das für die Spannungshaltung zuständige zweite Regelmodul 17 legt demgemäß beispielsweise eine Blindleistungsänderungsvorgabe ΔQ_{Last} für eine regelbare Last 5 und /oder eine Blindleistungsänderungsvorgabe ΔQ_{Speicher} für einen regelbaren Speicher 7 und/ oder eine Blindleistungsänderungsvorgabe ΔQ_{DEA} für eine regelbare DEA6 fest.

Die Regelmodule 16, 17 sind jeweils über zweite Kommunikationsmittel 21 direkt oder indirekt mit den Netzteilnehmern 5, 6, 7 verbunden. In Figur 2 ist dies schematisch dargestellt, indem nur die die Regelmodule 16, 17 umfassende Regelungseinheit 15 über entsprechende Kommunikationsmittel 21 mit den Netzteilnehmern 5, 6, 7 verbunden gezeigt ist. Die zweiten Kommunikationsmittel 21 können durch einzelne Steuerleitungen, einen Bus beispielsweise ein Netzwerk, und/ oder durch eine Funkübertragungseinrichtung gebildet sein. Sie können die Regelungseinheit 15 direkt oder indirekt mit den Netzteilnehmern 5, 6, 7 verbinden, Letzteres kann beispielsweise dadurch erfolgen, dass die Verbindung über eine Netzwerk-Cloud führt, wobei die Steuerbefehle in Gestalt der Leistungsänderungsvorgaben von der Regelungseinheit 15 in der Cloud gespeichert werden können und von den Netzteilnehmern 5, 6, 7 aus der Cloud abgerufen werden können. Dies ist allgemein als Clouding bekannt. Nachfolgend wird allgemein von Steuerleitungen 21 gesprochen. Über die zweiten Kommunikationsmittel 21 kann/ können die Leistungsänderungsvorgabe(n) an einen der oder an die Netzteilnehmer 5, 6, 7 übertragen werden. Dieser oder diese stellt/ stellen sich dann gemäß der Änderungsvorgabe ein.

Um genau zu sein, sind die zweiten Kommunikationsmittel 21 mit den Umrichtern der jeweiligen Netzteilnehmer 5, 6, 7 verbunden, da diese die eigentlich steuerbaren und regelbaren Komponenten der Netzteilnehmer 5, 6, 7 sind. Entsprechend stellen sich die Umrichter oder stellt sich der zumindest eine Umrichter gemäß der Änderungsvorgabe ein.

Das erfindungsgemäße Verfahren zur Regelung der Spannungshaltung und/oder der Frequenzhaltung in dem Energieversorgungssystem 1 wird nachfolgend beschrieben.

Die zweiten Messmittel 20 im Verteilnetz 3 ermitteln typische Messgrößen wie Knotenspannungen U_{VN} und übergeben diese über die Messleitungen 19 an die Bewertungsinstanz 18. Zudem werden über die Messleitungen 19 Ist-Zustandswerte der Netzteilnehmer an die Bewertungsinstanz 18 übergeben, um im Anschluss eine bereits heute existierende und aus der Literatur bekannte Netzzustandsbewertung durchzuführen. Gemäß Edmund Handschin in dem Buch "Elektrische Energieübertragungssysteme" kann die Bewertung z.B. anhand des Newton-Raphsons-Verfahrens durchgeführt werden. Als Ergebnis wird das Spannungsprofil für jeden Knoten des Verteilnetzes 3, eine Wirk- und Blindleistungseinspeisung eines jeden Netzteilnehmers 5, 6, 7, die entstandenen Verluste und die sich ergebenden Leistungsflüsse zwischen den Knoten ermittelt. Daraus ergibt sich, ob sich der jeweilige Netzteilnehmer 5, 6, 7 an der Systemdienstleistungserbringung durch Wirk-und/ oder Blindleistungseinspeisung zusätzlich zu ihrer jeweiligen aktuellen Einspeisung beteiligen können.

Die Fähigkeit zur Beteiligung eines jeden Netzteilnehmers 5, 6, 7 wird in eine Zustandsmatrix gemäß Tabelle 1 eingetragen und von der Bewertungsinstanz 18 bereitgestellt. Diese Zustandsmatrix wird an die Regelmodule 16 und 17 übergeben. Entsprechend der Tabelle 1 können vier Fälle für die Netzteilnehmer 5, 6, 7 definiert werden, die ihre aktuelle Fähigkeit beschreiben, Wirkleistung abzugeben (P+), Wirkleistung aufzunehmen (P-), Blindleistung abzugeben (Q+) und Blindleistung aufzunehmen (Q-). Leistungsabgabe bedeutet hier, dass in das Verteilnetz 3 Leistung eingespeist (P+, Q+) wird, während Leistungsaufnahme bedeutet, dass Leistung aus dem Verteilnetz bezogen (P-, Q-) wird. Eine eingetragene "1" in der Zustandsmatrix gibt eine mögliche Teilnahme eines der Netzteilnehmer 5, 6, 7 an einer Leistungsänderung an, d.h. seine Verfügbarkeit, während eine "0" eine Teilnahme ausschließt, d.h. dass dieser Netzteilnehmer 5, 6, 7 für eine bestimmte Betriebsart nicht verfügbar ist.

**Tabelle 1: Zustandsmatrix**

| | **P+** | **P-** | **Q+** | **Q-** |
|---|---|---|---|---|
| **Last 1** | 0 | 1 | - | - |
| **Last 2** | 0 | 0 | - | - |
| **···** | ··· | ··· | ··· | ··· |
| **Last i** | 1 | 1 | - | - |
| **Speicher 1** | 1 | 1 | 0 | 1 |
| **Speicher 2** | 1 | 0 | 0 | 0 |
| **···** | ··· | ··· | ··· | ··· |
| **Speicher i** | 1 | 1 | 0 | 1 |
| **DEA 1** | 1 | 0 | 0 | 0 |
| **DEA 2** | 1 | 0 | 1 | 0 |
| **···** | ··· | ··· | ··· | ··· |
| **DEA i** | 0 | 0 | 0 | 0 |

In der Zustandsmatrix ist somit für jeden Netzteilnehmer 5, 6, 7 angegeben, ob dieser aus Sicht des Netzes für eine Wirkleistungserhöhung P+, eine Wirkleistungsreduzierung P- und/ oder für eine Blindleistungserhöhung Q+ oder für eine Blindleistungsreduzierung Q- aktuell zur Verfügung steht.

Zu jedem Fall der Leistungsänderung kann für jede Art (Last, Speicher, DEA) von Netzteilnehmern 5, 6, 7 eine Maßnahme definiert werden, um an dem entsprechenden Netzteilnehmer 5, 6, 7 eine Leistungsänderung herbeizuführen. Die verschiedenen Maßnahmen sind in Tabelle 2 zusammengestellt.

**Tabelle 2: Maßnahmenkatalog**

| | **P+** | **P**- | **Q+** | **Q-** |
|---|---|---|---|---|
| **Last** | Leistungsaufnahme reduzieren | Leistungsaufnahme erhöhen | - | - |
| **Speicher** | elektrische Energie ausspeichern | elektrische Energie einspeichern | erhöhen | reduzieren |
| **DEA** | Hochfahren | Herunterfahren | erhöhen | reduzieren |

So kann aus Sicht des Netzes bei einer Last 5 eine Wirkleistungserhöhung P+ durch eine Reduzierung der Leistungsaufnahme, eine Wirkleistungsreduzierung P- durch eine Erhöhung der Leistungsaufnahme erfolgen. Im Falle eines Energiespeichers 7 kann eine Wirkleistungserhöhung P+ durch eine Ausspeicherung elektrischer Energie, eine Wirkleistungsreduzierung P- durch Einspeicherung elektrischer Energie erfolgen. Im Falle einer dezentralen Energieumwandlungsanlage 6 kann eine Wirkleistungserhöhung P+ durch Hochfahren der DEA 6, eine Wirkleistungsreduzierung P- durch Herunterfahren der DEA 6 erfolgen. In diesem Sinne bedeuten "Hochfahren" und "Herunterfahren" sowohl ein Hochfahren aus dem abgeschalteten Zustand auf einen bestimmten Leistungswert bzw. "Herunterfahren" von einem bestimmten Leistungswert in den abgeschalteten Zustand, als auch, sofern ausreichend Reserveleistung vorhanden ist, eine Leistungserhöhung oder Leistungsreduzierung um einen bestimmten Leistungswert. Entsprechendes gilt für einen Energiespeicher 7.

In Tabelle 2 bedeutet "Q+ erhöhen" die Verschiebung des Betriebspunktes des Energiespeichers 7 oder der DEA 6 in einen kapazitiven Bereich, bzw. in Richtung eines weniger induktiven Bereichs. Hierdurch wird in das Verteilnetz 2 mehr Blindleistung eingespeist. In entsprechender Weise bedeutet "Q- reduzieren" die Verschiebung des Betriebspunktes des Energiespeichers 7 oder der DEA 6 in einen weniger kapazitiven Bereich, bzw. in Richtung eines induktiveren Bereichs. Hierdurch wird dem Verteilnetz 2 mehr Blindleistung entnommen.

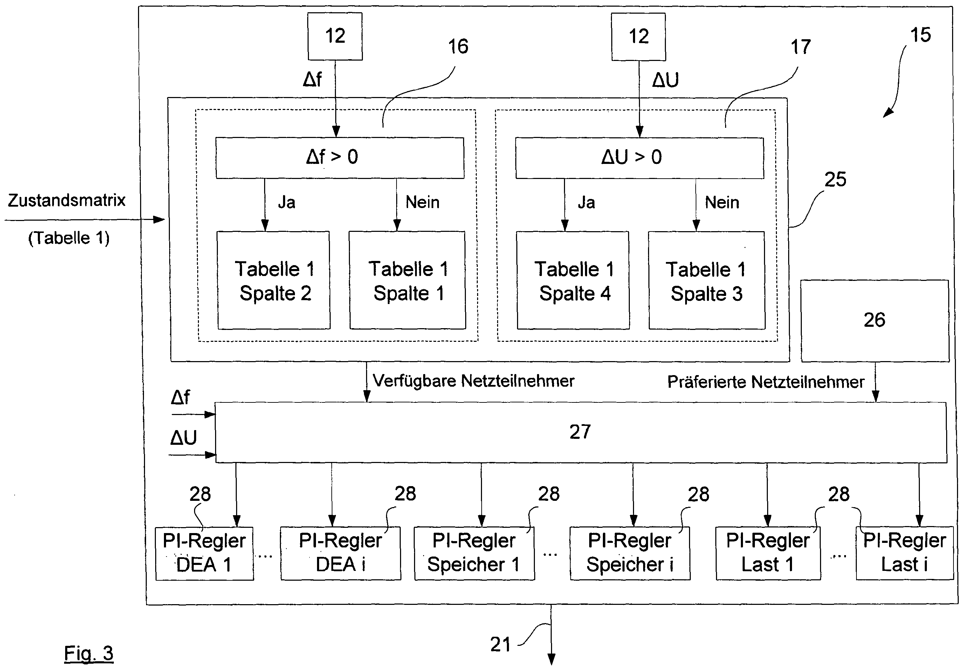

Figur 3 zeigt eine Detaildarstellung der einzelnen Funktionseinheiten der Regelungseinheit 15. Nachfolgend wird die Funktionsweise des ersten Regelmoduls 16 erläutert. Die Funktionsweise des zweiten Regelmoduls 17 ist analog.

In das erste Regelmodul 16 fließen die in Tabelle 1 beispielhaft veranschaulichte Zustandsmatrix aus der Bewertungsinstanz 18 und die von dem Differenzbildner 12 ermittelte Frequenzabweichung Δf als Eingangsgrößen ein. Alternativ zur Frequenzabweichung kann wie oben beschrieben eine Wirkleistungsabweichung verwendet werden. Das Regelmodul 16 umfasst einen Fallunterscheider 25, welcher prüft, ob eine positive bzw. negative Frequenzabweichung vorliegt, d.h. ob die Frequenzabweichung größer null Δf > 0 oder kleiner null Δf < 0 ist. Zu dem entsprechend festgestellten Fall wird aus der Zustandsmatrix ermittelt, welche Netzteilnehmer 5, 6, 7 zur Verfügung stehen, eine Maßnahme zur Kompensation der Frequenzabweichung Δf einzuleiten oder zu einer solchen beizutragen.

Liegt beispielsweise eine Unterfrequenz (Δf > 0 => Nein) vor, werden von dem ersten Regelmodul 16 aus der Zustandsmatrix diejenigen Netzteilnehmer 5, 6, 7 ermittelt, die für eine Wirkleistungserhöhung verwendet werden können und zur Verfügung stehen. Dies kann dadurch erfolgen, dass in der Zustandsmatrix diejenige Spalte ausgewählt wird, die den Fall "Wirkleistungserhöhung" im Verteilnetz 3 durch einen der Netzteilnehmer 5, 6, 7 betrifft. In dem o.g. Beispiel gemäß Tabelle 1 wird dies durch die erste Spalte P+ ausgedrückt.

Je nach Verfügbarkeit der Netzteilnehmer 5, 6, 7 können gegen eine Unterfrequenz folgende Maßnahmen durchgeführt werden, um die Unterfrequenz auszugleichen: Hochfahren wenigstens einer DEA 6 und/oder Entladen zumindest eines Speichers 7 und/ oder Reduktion zumindest einer regelbaren (verschiebbaren) Last 5. Damit stehen dem Regelungsmodul nach den Angaben in der Entscheidungsmatrix eine Anzahl, insbesondere eine Vielzahl von Netzteilnehmern 5, 6, 7 zur Verfügung, die jeweils eine der genannten Maßnahmen durchführen können. In dem Beispiel gemäß Tabelle 1 könnten somit Last i reduziert, Speicher 1, Speicher 2 oder Speicher i entladen oder DEA 1 oder DEA 2 hochgefahren werden. Insbesondere kann auch eine Kombination dieser Maßnahmen ausgewählt werden.

Liegt andererseits eine Überfrequenz (Δf > 0 => Ja) vor, werden von dem ersten Regelmodul 16 aus der Zustandsmatrix diejenigen Netzteilnehmer 5, 6, 7 ermittelt, die für eine Wirkleistungsreduzierung verwendet werden können und zur Verfügung stehen. Dies kann dadurch erfolgen, dass in der Zustandsmatrix diejenige Spalte ausgewählt wird, die den Fall "Wirkleistungsreduzierung" im Verteilnetz 3 durch einen der Netzteilnehmer 5, 6, 7 betrifft. In dem o.g. Beispiel gemäß Tabelle 1 wird dies durch die zweite Spalte P- ausgedrückt.

Je nach Verfügbarkeit der Netzteilnehmer 5, 6, 7 können gegen eine Überfrequenz folgende Maßnahmen durchgeführt werden, um die Überfrequenz auszugleichen: Herunterfahren wenigstens einer DEA 6 und /oder Aufladen zumindest eines Speichers 7 und/ oder Erhöhen zumindest einer regelbaren (verschiebbaren) Last 5. Damit stehen dem Regelungsmodul nach den Angaben in der Entscheidungsmatrix auch für diesen Fall eine Anzahl, insbesondere eine Vielzahl von Netzteilnehmern 5, 6, 7 zur Verfügung, die jeweils eine der genannten Maßnahmen durchführen können. In dem Beispiel gemäß Tabelle 1 könnten somit Last 1 oder Last i erhöht, oder Speicher 1 oder Speicher i aufgeladen werden. Insbesondere kann auch eine Kombination dieser Maßnahmen ausgewählt werden. Von den DEAs steht aktuell keine zur Verfügung.

Das zuvor in Bezug zu dem ersten, die Frequenzhaltung durchführende Regelmodul 16 beschriebene Verfahren, wird in entsprechender Weise auch von dem zweiten, die Spannungshaltung durchführenden Regelmodul 17 angewendet.

In das zweite Regelmodul 17 fließen die in Tabelle 1 beispielhaft veranschaulichte Zustandsmatrix aus der Bewertungsinstanz 18 und die von dem Differenzbildner 12 ermittelte Spannungsabweichung ΔU als Eingangsgrößen ein. Alternativ zur Spannungsabweichung kann wie oben beschrieben eine Blindleistungsabweichung verwendet werden. Das zweite Regelmodul 17 umfasst ebenfalls einen Fallunterscheider 25, welcher prüft, ob eine positive bzw. negative Spannungsabweichung vorliegt, d.h. ob die Spannungsabweichung größer null ΔU > 0 oder kleiner null ΔU < 0 ist. Zu dem entsprechend festgestellten Fall wird aus der Zustandsmatrix ermittelt, welche Netzteilnehmer 5, 6, 7 zur Verfügung stehen, eine Maßnahme zur Kompensation der Spannungsabweichung ΔU einzuleiten oder zu einer solchen beizutragen.

Liegt beispielsweise eine Unterspannung (ΔU > 0 => Nein) vor, werden von dem zweiten Regelmodul 17 aus der Zustandsmatrix diejenigen Netzteilnehmer 5, 6, 7 ermittelt, die für eine Blindleistungserhöhung verwendet werden können und zur Verfügung stehen. Dies kann dadurch erfolgen, dass in der Zustandsmatrix diejenige Spalte ausgewählt wird, die den Fall "Blindleistungserhöhung" im Verteilnetz 3 durch einen der Netzteilnehmer 5, 6, 7 betrifft. In dem o.g. Beispiel gemäß Tabelle 1 wird dies durch die dritte Spalte Q+ ausgedrückt.

Gegen eine Unterspannung kann als Kompensationsmaßnahme lediglich eine Verschiebung des Betriebspunktes eines Energiespeichers 7 oder einer DEA 6 in einen weniger induktiven Bereich, bzw. in Richtung eines kapazitiveren Bereichs durchgeführt werden. Hierdurch wird dem Verteilnetz 2 mehr Blindleistung zur Verfügung gestellt und die Netzspannung erhöht. Damit stehen dem Regelungsmodul nach den Angaben in der Entscheidungsmatrix eine Anzahl, insbesondere eine Vielzahl von Netzteilnehmern 5, 6, 7 zur Verfügung, die jeweils die genannte Maßnahme durchführen können. In dem Beispiel gemäß Tabelle 1 ist dies lediglich DEA 2.

Liegt andererseits eine Überspannung (ΔU > 0 => Ja) vor, werden von dem zweiten Regelmodul 17 aus der Zustandsmatrix diejenigen Netzteilnehmer 5, 6, 7 ermittelt, die für eine Blindleistungsreduzierung verwendet werden können und zur Verfügung stehen. Dies kann dadurch erfolgen, dass in der Zustandsmatrix diejenige Spalte ausgewählt wird, die den Fall "Blindleistungsreduzierung" im Verteilnetz 3 durch einen der Netzteilnehmer 5, 6, 7 betrifft. In dem o.g. Beispiel gemäß Tabelle 1 wird dies durch die vierte Spalte Q- ausgedrückt.

Gegen eine Überspannung kann als Kompensationsmaßnahme lediglich eine Verschiebung des Betriebspunktes eines Energiespeichers 7 oder einer DEA 6 in einen induktiveren Bereich, bzw. in Richtung eines weniger kapazitiven Bereichs durchgeführt werden. Hierdurch wird dem Verteilnetz 2 weniger Blindleistung zur Verfügung gestellt und die Netzspannung sinkt. Damit stehen dem Regelungsmodul nach den Angaben in der Entscheidungsmatrix eine Anzahl, insbesondere eine Vielzahl von Netzteilnehmern 5, 6, 7 zur Verfügung, die jeweils die genannte Maßnahme durchführen können. In dem Beispiel gemäß Tabelle 1 sind dies Speicher 1 und Speicher i, deren Betriebspunkt jeweils oder in Kombination verändert werden kann.

Gemäß einer bevorzugten Weiterbildung der Regelungseinheit 15 kann diese einen Speicher enthalten, in dem eine Präferenzmatrix 26 mit Angaben von zu bevorzugenden Netzteilnehmern 5, 6, 7 abgespeichert ist. Diese Präferenzmatrix 26 kann im Wesentlichen denselben Aufbau wie die Zustandsmatrix aufweisen. Anstelle der Verfügbarkeit der Netzteilnehmer kann in der Präferenzmatrix gemäß der Präferenz des Anwenders die Teilnahme einer oder mehrerer bestimmter Netzteilnehmer 5, 6, 7 definiert sein bzw. werden. So kann beispielsweise in der Präferenzmatrix 26 festgelegt sein, dass zunächst die DEAs 6 für die Einleitung einer Maßnahme herangezogen werden und Lasten als mögliche Maßnahme nicht berücksichtigt werden. Vorzugsweise kann die Präferenzmatrix 26 zeitabhängig sein. Dies bedeutet, dass die Präferenzmatrix 26 nicht konstant ist, sondern sich die Präferenz, mit der ein Netzteilnehmer 5, 6, 7 für die Vornahme einer Leistungsänderung ausgewählt wird, sich über den Tag ändern kann. So können beispielsweise Photovoltaikanlagen als DEAs 6 zu gewissen Tageszeiten unberücksichtigt bleiben und in diesem Zeitraum für eine Lieferung von Wirkleistung elektrische Energiespeicher 7 bevorzugt werden.

Die Regelungseinheit 15 kann zudem eine Entscheidungsinstanz 27 aufweisen, die die aus der Zustandsmatrix ermittelten, verfügbaren Netzteilnehmer 5, 6, 7 mit den präferierten Netzteilnehmern 5, 6, 7 der Präferenzmatrix 26 abgleichen kann. Dies bedeutet, dass nur bestimmte der verfügbaren Netzteilnehmer 5, 6, 7 tatsächlich für eine Leistungsänderung ausgewählt werden. Nur diese ausgewählten Netzteilnehmer 5, 6, 7 werden anschließend von der Regelungseinheit 15 beeinflusst. Hierfür übergibt die Entscheidungsinstanz 27 die Sollwertabweichung Δf, ΔU an die PI-Regler 28 der tatsächlich ausgewählten Netzteilnehmer 5, 6, 7. Es sei angemerkt, dass auch andere Reglertypen 28 als PI-Regler verwendet werden können, beispielsweise PID-Regler.

Die Regler 28 können jeweils Teil des jeweiligen Netzteilnehmers 5, 6, 7 sein, d.h. dezentral vorhanden sein. Die Ausführungsvariante in Figur 3 zeigt dagegen die Regler 28 integriert in die zentrale Regelungseinheit 15. Die zentrale Variante führt zu einer geringeren Veränderung heute bestehender Anlagen. Alle PI-Regler 28 sind dabei kompakt in einer Anlage zusammengefasst. Auch eine Kombination von dezentralen und zentralen Reglern 28 ist möglich.

Die Regler 28 ermitteln die Änderungsvorgaben ΔP_{Speicher}, ΔP_{Last}, ΔP_{SpeicherVN}, ΔP_{DEA} bzw. ΔQ_{Speicher}, ΔQ_{Last}, ΔQ_{SpeicherVN}, ΔQ_{DEA} für den entsprechenden Netzteilnehmer. Diese werden dann mittels der zweiten Kommunikationsmittel 21 zu den Netzteilnehmern 5, 6, 7 übertragen.

Zusätzlich zu den Energiespeichern 7, die dezentral an das Verteilnetz 3 angeschlossen sind, kann das erfindungsgemäße System wenigstens einen zentralen Energiespeicher 22, 23 aufweisen, der an einem zentralen Punkt des Verteilnetzes 3 oder des Übertragungsnetzes 2 angeschlossen ist. In Figur 2 ist ein zentraler Energiespeicher 22 beispielhaft an die oberspannungsseitige Sammelschiene 10 des Transformators 4 angeschlossen. Alternativ oder zusätzlich kann ein zentraler Energiespeicher 23 an die unterspannungsseitige Sammelschiene des Transformators 4 angeschlossen sein. Ein solcher Energiespeicher ist in Figur 2 gestrichelt dargestellt. Grundsätzlich ergibt sich die Positionierung des Speichers 22, 23 durch den Markt. Für die vorliegende Erfindung ist ein zentraler Speicher vorteilhaft, da auch im Falle nicht verfügbarer Netzteilnehmer 5, 6, 7 eine Frequenz- und/oder Spannungsabweichung ausgeregelt werden kann. Dies kann gerade in Zeiten hoher Verteilnetzbelastungen von Vorteil sein, da in diesem Fall viele Netzrestriktionen zu erwarten sind. Der zentrale Speicher belastet das Verteilnetz aber nicht zusätzlich.

Auch bei diesem zentralen Energiespeicher 22, 23 werden Werte elektrischer Zustandsgrößen erfasst, insbesondere seine aktuelle Wirkleistungsaufnahme oder - abgabe P_{Speicher}, seine aktuelle Blindleistungsaufnahme oder -abgabe Q_{Speicher}, die Frequenz und die Spannung an seinem Anschlussknoten und seine Verfügbarkeit. Die erfassten Werte werden über die ersten Kommunikationsmittel 19 an die Bewertungsinstanz 18 übertragen. Die Bewertungsinstanz 18 berücksichtigt die Existenz des zentralen Speichers 22, 23 und damit seine potentielle Verfügbarkeit in der Zustandsmatrix, so dass der Fallunterscheider 25 auch diesen zentralen Speicher 22, 23 bei Verfügbarkeit auswählen kann. Schließlich ist der zentrale Speicher 22, 23 über die zweiten Kommunikationsmittel 21 auch mit der Regelungseinheit 15 verbunden, so dass seinem Regler 28 entsprechende Leistungsvorgaben übertragen werden können, um ihn zu entsprechend einzustellen.

### Bezugszeichenliste

- 1: Energieversorgungssystem
- 2: Übertragungsnetz
- 3: Verteilnetz
- 4: Umspanneinrichtung, HöS/HS-Transformator
- 5: regelbare Last
- 5a: nicht regelbare Last
- 6: Dezentrale Energieumwandlungsanlage (DEA)
- 7: Elektrischer Energiespeicher
- 8: Anschlussleitungen zum Verteilnetz
- 9: Konventionelles Kraftwerk
- 10: Oberspannungsseite, Sammelschiene
- 11: Unterspannungsseite, Sammelschiene
- 12: Differenzbildner
- 13: Messmittel zur Messung der Spannung oder Blindleistung des Übertragungsnetzes
- 14: Messmittel zur Messung der Frequenz oder Wirkleistung des Übertragungsnetzes
- 15: Regelungseinheit
- 16: Frequenzregelmodul
- 17: Spannungsregelmodul
- 18: Bewertungsinstanz
- 19: Kommunikationsmittel, Messleitungen
- 20: Messmittel für Netzgrößen im Verteilnetz
- 21: Kommunikationsmittel, Steuerleitung
- 22: zentraler elektrischer Speicher
- 23: zentraler elektrischer Speicher, alternativer Standort
- 24: Messmittel in Netzteilnehmer
- 25: Fallunterscheider
- 26: Präferenzmatrix
- 27: Entscheidungsinstanz
- 28: PI-Regler

## Patentansprüche

1. System zur Regelung der Spannungshaltung und/oder der Frequenzhaltung in einem Energieversorgungssystem (1), das ein Übertragungsnetz (2) einer ersten Spannungsebene und zumindest ein damit über eine Umspanneinrichtung (4) gekoppeltes Verteilnetz (3) einer zweiten, gegenüber der ersten Spannungsebene niedrigeren Spannungsebene aufweist, wobei das Verteilnetz (3) mit einer Anzahl regelbarer Netzteilnehmer (5, 6, 7) verbunden ist, **gekennzeichnet durch**
- erste Messmittel (13, 14) zur Erfassung der Frequenz (f_{gemessen}) oder Wirkleistung und/oder zur Erfassung der Spannung (U_{gemessen}) oder Blindleistung an einem Knoten des Übertragungsnetzes (2),
- zweite Messmittel (20) zur Erfassung von Werten elektrischer Netzzustandsgrößen (P_{VN}, Q_{VN}, U_{VN}, f_{VN}) an wenigstens einem Knoten des Verteilnetzes (3) sowie
- dritte Messmittel (24) zur Erfassung von Werten elektrischer Teilnehmerzustandsgrößen (P_{Last}, P_{SpeicherVN}, Q_{SpeicherVN}, P_{DEA}, Q_{DEA}, U_{DEA}, f_{DEA}, Verfügbarkeit) der Netzteilnehmer (5, 6, 7),
- eine Bewertungsinstanz (18) zur Netzzustandsbewertung, die über erste Kommunikationsmittel (19) zumindest indirekt mit den zweiten und dritten Messmitteln (20, 24) verbunden ist und die dazu eingerichtet ist, aus den erfassten Werten der Netz- und Teilnehmerzustandsgrößen die Verfügbarkeit eines jeden Netzteilnehmer (5, 6, 7) für eine zusätzliche Leistungsaufnahme und/ oder Leistungsabgabe zu ermitteln und als Zustandsmatrix bereit zu stellen, und
- eine Regelungseinheit (15) umfassend mindestens einen Differenzbildner (12) zur Bildung einer Differenz (Δf, ΔU) aus einer vorgebbaren Sollgröße (f_{Soll}, U_{Soll}) und der erfassten Frequenz (f_{gemessen}) oder Wirkleistung und/oder Spannung (U_{gemessen}) oder Blindleistung, weiterhin umfassend mindestens ein Regelmodul (16, 17), dem die gebildete Differenz (Δf, ΔU) und die Zustandsmatrix zuleitbar sind, wobei das Regelmodul (16, 17) dazu eingerichtet ist, aus der Differenz (Δf, ΔU) und der Zustandsmatrix diejenigen Netzteilnehmer (5, 6, 7) zu identifizieren, die eine Maßnahme zur Kompensation der Differenz (Δf, ΔU) ausführen können, und für zumindest einen dieser Netzteilnehmer (5, 6, 7) eine Leistungsvorgabe, insbesondere eine Leistungsänderungsvorgabe, derart festzulegen, dass die Differenz (Δf, ΔU) zu Null kompensierbar ist, wobei die Regelungseinheit (15) über zweite Kommunikationsmittel (21) zumindest indirekt mit den Netzteilnehmern (5, 6, 7) zur Übertragung der Leistungsvorgabe, insbesondere der Leistungsänderungsvorgabe, verbunden ist.

2. System nach Anspruch 1, **dadurch gekennzeichnet, dass** die Anzahl der Netzteilnehmer (5, 6, 7) wenigstens eine regelbare Last (5), wenigstens einen regelbaren Energiespeicher (7) und wenigstens eine dezentrale, in das Verteilnetz (3) einspeisende regelbare Energieumwandlungsanlage (6) umfasst.

3. System nach Anspruch 1 oder 2, **dadurch gekennzeichnet, dass** das Regelmodul (16, 17) dazu eingerichtet ist, für jeden der identifizierten Netzteilnehmer (5, 6, 7) eine Leistungsvorgabe, insbesondere eine Leistungsänderungsvorgabe festzulegen.

4. System nach einem der vorherigen Ansprüche, **dadurch gekennzeichnet, dass** die ersten Messmittel (13, 14) oberspannungsseitig der Umspanneinrichtung (4) angeordnet sind.

5. System nach einem der vorherigen Ansprüche, **dadurch gekennzeichnet, dass** die zweiten Messmittel (20) an mehreren, insbesondere einer Vielzahl an Knoten des Verteilnetzes (3) zur jeweiligen Erfassung von Werten lokaler elektrischer Netzzustandsgrößen (P_{VN}, Q_{VN}, U_{VN}, f_{VN}) des Verteilnetzes (3) angeordnet sind.

6. System nach einem der vorherigen Ansprüche, **dadurch gekennzeichnet, dass** die Netzzustandsgrößen (P_{VN}, Q_{VN}, U_{VN}, f_{VN}) zumindest eine der Größen gelieferte oder eingespeiste Wirkleistung (P_{VN}), gelieferte oder eingespeiste Blindleistung (Q_{VN}), Netzfrequenz (f_{VN}) oder Netzspannung (U_{VN}) des Verteilnetzes (3) an dem oder den Knoten ist.

7. System nach einem der vorherigen Ansprüche, **dadurch gekennzeichnet, dass** in der Zustandsmatrix für jeden Netzteilnehmer (5, 6, 7) angegeben ist, ob dieser aus Sicht des Verteilnetzes (3) für eine Wirkleistungserhöhung (P+), eine Wirkleistungsreduzierung (P-), für eine Blindleistungserhöhung (Q+) und/ oder für eine Blindleistungsreduzierung (Q-) aktuell zur Verfügung steht.

8. System nach einem der vorherigen Ansprüche, **dadurch gekennzeichnet, dass** die Bewertungsinstanz (18) dazu eingerichtet ist, die Ermittlung der Verfügbarkeit der Netzteilnehmer (5, 6, 7) aus den erfassten Werten der Netz- und Teilnehmerzustandsgrößen mittels des Newton-Raphsons-Verfahrens durchzuführen.

9. System nach einem der vorherigen Ansprüche, **dadurch gekennzeichnet, dass** das Regelmodul (16, 17) einen Fallunterscheider (25) zur Bestimmung aufweist, ob die Differenz positiv oder negativ ist, wobei das Regelmodul (16, 17) dazu eingerichtet ist,
- im Falle einer positiven Differenz (Δf) der Frequenz oder Wirkleistung diejenigen Netzteilnehmer (5, 6, 7) aus der Zustandsmatrix zu identifizieren, die für eine Wirkleistungsreduzierung (P-) aktuell zur Verfügung stehen, und
- im Falle einer negativen Differenz (Δf) der Frequenz oder Wirkleistung diejenigen Netzteilnehmer (5, 6, 7) aus der Zustandsmatrix zu identifizieren, die für eine Wirkleistungserhöhung (P+) aktuell zur Verfügung stehen,
und/ oder
- im Falle einer positiven Differenz (ΔU) der Spannung oder Blindleistung diejenigen Netzteilnehmer (5, 6, 7) aus der Zustandsmatrix zu identifizieren, die für eine Blindleistungsreduzierung (Q-) aktuell zur Verfügung stehen,
- im Falle einer negativen Differenz (ΔU) der Spannung oder Blindleistung diejenigen Netzteilnehmer (5, 6, 7) aus der Zustandsmatrix zu identifizieren, die für eine Blindleistungserhöhung (Q+) aktuell zur Verfügung stehen.

10. System nach einem der vorherigen Ansprüche, **dadurch gekennzeichnet, dass** die Regelungseinheit (15) eine vorgebbare Präferenzmatrix (26) umfasst, in der diejenigen Netzteilnehmer (5, 6, 7) gekennzeichnet sind, die für die Ausführung der Maßnahme zu präferieren sind, und dass die Regelungseinheit (15) eine Entscheidungsinstanz (27) aufweist, die dazu eingerichtet ist, aus den identifizierten Netzteilnehmern (5, 6, 7) diejenigen zu selektieren, die gemäß der Präferenzmatrix (26) zu präferieren sind.

11. Verfahren zur Regelung der Spannungshaltung und/oder der Frequenzhaltung in einem Energieversorgungssystem (1), das ein Übertragungsnetz (2) einer ersten Spannungsebene und zumindest ein damit über eine Umspanneinrichtung (4) gekoppeltes Verteilnetz (3) einer zweiten, gegenüber der ersten Spannungsebene niedrigeren Spannungsebene aufweist, wobei das Verteilnetz (3) mit einer Anzahl regelbarer Netzteilnehmer (5, 6, 7) verbunden ist, **dadurch gekennzeichnet, dass**
- erste Messmittel (13, 14) die Frequenz (f_{gemessen}) oder Wirkleistung und/oder die Spannung (U_{gemessen}) oder Blindleistung an einem Knoten des Übertragungsnetzes (2) erfassen,
- zweite Messmittel (20) Werte elektrischer Netzzustandsgrößen (P_{VN}, Q_{VN}, U_{VN}, f_{VN}) an wenigstens einem Knoten des Verteilnetzes (3) erfassen, sowie
- dritte Messmittel (24) Werte elektrischer Teilnehmerzustandsgrößen (P_{Last}, P_{SpeicherVN}, Q_{SpeicherVN}, P_{DEA}, Q_{DEA}, U_{DEA}, F_{DEA}, Verfügbarkeit) der Netzteilnehmer (5, 6, 7) erfassen, wobei
- eine Bewertungsinstanz (18) eine Netzzustandsbewertung durchführt und aus den erfassten Werten der Netz- und Teilnehmerzustandsgrößen die Verfügbarkeit eines jeden Netzteilnehmers (5, 6, 7) für eine zusätzliche Leistungsaufnahme und/ oder Leistungsabgabe ermittelt und als Zustandsmatrix bereitstellt, und
- wenigstens ein Differenzbildner (12) einer Regelungseinheit (15) eine Differenz (Δf, ΔU) aus einer vorgebbaren Sollgröße (f_{Soll}, U_{Soll}) und der erfassten Frequenz (f_{gemessen}) oder Wirkleistung und/ oder Spannung (U_{gemessen}) oder Blindleistung ermittelt,
- die gebildete Differenz (Δf, ΔU) und die Zustandsmatrix einem Regelmodul (16, 17) zur Verfügung gestellt sind, das aus der Differenz (Δf, ΔU) und der Zustandsmatrix diejenigen Netzteilnehmer (5, 6, 7) identifiziert, die eine Maßnahme zur Kompensation der Differenz (Δf, ΔU) ausführen können,
- wobei das Regelmodul (16, 17) für zumindest einen dieser Netzteilnehmer (5, 6, 7) eine Leistungsvorgabe, insbesondere eine Leistungsänderungsvorgabe, derart festlegt, dass die Differenz (Δf, ΔU) zu Null kompensierbar ist, und
- die Leistungsvorgabe, insbesondere der Leistungsänderungsvorgabe, von der Regelungseinheit (15) über zweite Kommunikationsmittel (21) zumindest indirekt zu den Netzteilnehmern (5, 6, 7) übertragen und von diesen eingestellt wird.

12. System nach Anspruch 1 oder 2, **dadurch gekennzeichnet, dass** das Regelmodul (16, 17) für jeden der identifizierten Netzteilnehmer (5, 6, 18) eine Leistungsvorgabe, insbesondere eine Leistungsänderungsvorgabe festlegt.

13. Verfahren nach einem der vorherigen Ansprüche, **dadurch gekennzeichnet, dass** die Erfassung der Frequenz (f_{gemessen}) oder Wirkleistung und/oder der Spannung (U_{gemessen}) oder Blindleistung oberspannungsseitig der Umspanneinrichtung (4) erfolgt.

14. Verfahren nach einem der vorherigen Ansprüche, **dadurch gekennzeichnet, dass** die Erfassung von Werten lokaler elektrischer Netzzustandsgrößen (P_{VN}, Q_{VN}, U_{VN}, f_{VN}) an mehreren, insbesondere an einer Vielzahl an Knoten des Verteilnetzes (3) erfolgt.

15. Verfahren nach einem der vorherigen Ansprüche, **dadurch gekennzeichnet, dass** als Netzzustandsgröße (P_{VN}, Q_{VN}, U_{VN}, f_{VN}) zumindest eine der Größen gelieferte oder eingespeiste Wirkleistung (P_{VN}), gelieferte oder eingespeiste Blindleistung (Q_{VN}), Netzfrequenz (f_{VN}) oder Netzspannung (U_{VN}) des Verteilnetzes (3) an dem oder den Knoten gemessen wird.

16. Verfahren nach einem der vorherigen Ansprüche, **dadurch gekennzeichnet, dass** in der Zustandsmatrix für jeden Netzteilnehmer (5, 6, 7) angegeben wird, ob dieser aus Sicht des Verteilnetzes (3) für eine Wirkleistungserhöhung (P+), eine Wirkleistungsreduzierung (P-), für eine Blindleistungserhöhung (Q+) und/ oder für eine Blindleistungsreduzierung (Q-) aktuell zur Verfügung steht.

17. Verfahren nach einem der vorherigen Ansprüche, **dadurch gekennzeichnet, dass** die Bewertungsinstanz (18) die Ermittlung der Verfügbarkeit der Netzteilnehmer (5, 6, 7) aus den erfassten Werten der Netz- und Teilnehmerzustandsgrößen mittels des Newton-Raphsons-Verfahrens durchführt.

18. Verfahren nach einem der vorherigen Ansprüche, **dadurch gekennzeichnet, dass** das Regelmodul (16, 17) prüft, ob die Differenz positiv oder negativ ist, wobei das Regelmodul (16, 17)
- im Falle einer positiven Differenz (Δf) der Frequenz oder Wirkleistung diejenigen Netzteilnehmer (5, 6, 7) aus der Zustandsmatrix identifiziert, die für eine Wirkleistungsreduzierung (P-) aktuell zur Verfügung stehen, und
- im Falle einer negativen Differenz (Δf) der Frequenz oder Wirkleistung diejenigen Netzteilnehmer (5, 6, 7) aus der Zustandsmatrix identifiziert, die für eine Wirkleistungserhöhung (P+) aktuell zur Verfügung stehen, und/ oder
- im Falle einer positiven Differenz (ΔU) der Spannung oder Blindleistung diejenigen Netzteilnehmer (5, 6, 7) aus der Zustandsmatrix identifiziert, die für eine Blindleistungserhöhung (Q+) aktuell zur Verfügung stehen,
- im Falle einer negativen Differenz (ΔU) der Spannung oder Blindleistung diejenigen Netzteilnehmer (5, 6, 7) aus der Zustandsmatrix identifiziert, die für eine Blindleistungsreduzierung (Q-) aktuell zur Verfügung stehen.

19. Verfahren nach einem der vorherigen Ansprüche, **dadurch gekennzeichnet, dass** die Regelungseinheit (15) eine Entscheidungsinstanz (27) aufweist, der eine Präferenzmatrix (26) zur Verfügung gestellt ist, in der diejenigen Netzteilnehmer (5, 6, 7) gekennzeichnet sind, die für die Ausführung der Maßnahme zu präferieren sind, wobei die Entscheidungsinstanz aus den identifizierten Netzteilnehmern (5, 6, 7) diejenigen selektiert, die gemäß der Präferenzmatrix (26) zu präferieren sind.

## Claims

1. System for controlling the voltage maintenance and/or the frequency maintenance in an energy supply system (1), comprising a transmission network (2) of a first voltage level and, coupled thereto via a substation device (4), at least one distribution network (3) of a second voltage level, which is lower than the first voltage level, wherein the distribution network (3) is connected to a number of controllable network participants (5, 6, 7), **characterized by**
- first measuring means (13, 14) for detecting the frequency (f_{measured}) or active power and/or for detecting the voltage (U_{measured}) or reactive power at a node of the transmission network (2),
- second measuring means (20) for detecting values of electrical network state variables (P_{VN}, Q_{VN}, U_{VN}, f_{VN}) at at least one node of the distribution network (3), and
- third measuring means (24) for detecting values of electrical participant state variables (P_{load}, P_{storeVN}, Q_{storeVN}, P_{DEA}, Q_{DEA}, U_{DEA}, f_{DEA}, availability) of the network participants (5, 6, 7),
- an evaluation entity (18) for network state evaluation, which is connected to the second and third measuring means (20, 24) at least indirectly via first communication means (19) and which is configured to determine from the detected values of the network and participant state variables the availability of each network participant (5, 6, 7) for an additional power consumption and/or power output and to provide it as a state matrix, and
- a control unit (15) comprising at least one difference-forming element (12) for forming a difference (Δf, ΔU) from a predefinable setpoint Variable (fₛₑₜₚₒᵢₙₜ, Uₛₑₜₚₒᵢₙₜ) and the detected frequency (f_{measured}) or active power and/or voltage (f_{measured}) or reactive power, furthermore comprising at least one control module (16, 17), to which the difference (Δf, ΔU) formed and the state matrix can be forwarded, wherein the control module (16, 17) is configured to identify from the difference (Δf, ΔU) and the state matrix those network participants (5, 6, 7) which can implement a measure for compensation of the difference (Δf, ΔU), and to define for at least one of said network participants (5, 6, 7) a power stipulation, in particular a power change stipulation, in such a way that the difference (Δf, ΔU) can be compensated for to become zero, wherein the control unit (15) is connected to the network participants (5, 6, 7) at least indirectly via a second communication means (21) for the transmission of the power stipulation, in particular the power change stipulation.

2. System according to Claim 1, **characterized in that** the number of network participants (5, 6, 7) comprises at least one controllable load (5), at least one controllable energy store (7) and at least one decentralized controllable energy conversion installation (6) feeding into the distribution network (3).

3. System according to Claim 1 or 2, **characterized in that** the control module (16, 17) is configured to define a power stipulation, in particular a power change stipulation, for each of the identified network participants (5, 6, 7).

4. System according to any of the preceding claims, **characterized in that** the first measuring means (13, 14) are arranged on the high voltage side of the substation device (4).

5. System according to any of the preceding claims, **characterized in that** the second measuring means (20) are arranged at a plurality, in particular a multiplicity, of nodes of the distribution network (3) for respectively detecting values of local electrical network state variables (P_{VN}, Q_{VN}, U_{VN}, f_{VN}) of the distribution network (3).

6. System according to any of the preceding claims, **characterized in that** the network state variables (P_{VN}, Q_{VN}, U_{VN}, f_{VN}) are at least one of the variables: supplied or fed-in active power (P_{VN}), supplied or fed-in reactive power (Q_{VN}), network frequency (f_{VN}) or network voltage (U_{VN}) of the distribution network (3) at the node or nodes.

7. System according to any of the preceding claims, **characterized in that** the state matrix indicates for each network participant (5, 6, 7) whether the latter is currently available from the standpoint of the distribution network (3) for an active power increase (P+), an active power reduction (P-), for a reactive power increase (Q+) and/or for a reactive power reduction (Q-).

8. System according to any of the preceding claims, **characterized in that** the evaluation entity (18) is configured to carry out the determination of the availability of the network participants (5, 6, 7) from the detected values of the network and participant state variables by means of the Newton-Raphson method.

9. System according to any of the preceding claims, **characterized in that** the control module (16, 17) has a case discriminator (25) for determining whether the difference is positive or negative, wherein the control module (16, 17) is configured
- in the case of a positive difference (Δf) of the frequency or active power, to identify those network participants (5, 6, 7) from the state matrix which are currently available for an active power reduction (P-), and
- in the case of a negative difference (Δf) of the frequency or active power, to identify those network participants (5, 6, 7) from the state matrix which are currently available for an active power increase (P+),
and/or
- in the case of a positive difference (ΔU) of the voltage or reactive power, to identify chose network participants (5, 6, 7) from the state matrix which are currently available for a reactive power reduction (Q-),
- in the case of a negative difference (ΔU) of the voltage cr reactive power, to identify those network participants (5, 6, 7) from the state matrix which are currently available for a reactive power increase (Q+).

10. System according to any of the preceding claims, **characterized in that** the control unit (15) comprises a predefinable preference matrix (26), in which are identified those network participants (5, 6, 7) which are tc be preferred for the implementation of the measure, and **in that** the control unit (15) has a decision entity (27), which is configured to select from the identified network participants (5, 6, 7) those which are to be preferred in accordance with the preference matrix (26).

11. Method for controlling the voltage maintenance and/or the frequency maintenance in an energy supply system (1), comprising a transmission network (2) of a first voltage level and, coupled thereto via a substation device (4), at least one distribution network (3) of a second voltage level, which is lower than the first voltage level, wherein the distribution network (3) is connected to a number of controllable network participants (5, 6, 7), **characterized in that**
- first measuring means (13, 14) detect the frequency (f_{measured}) or active power and/or for detecting the voltage (f_{measured}) or reactive power at a node of the transmission network (2),
- second measuring means (20) detect values of electrical network state variables (P_{VN}, Q_{VN}, U_{VN}, f_{VN}) at at least one node of the distribution network (3), and
- third measuring means (24) detect values of electrical participant state variables (P_{load}, P_{storeVN}, Q_{storeVN}, P_{DEA}, Q_{DEA}, U_{DEA}, f_{DEA}, availability) of the network participants (5, 6, 7), wherein
- an evaluation entity (18) carries out a network state evaluation and determines from the detected values of the network and participant state variables the availability of each network participant (5, 6, 7) for an additional power consumption and/or power output and provides it as state matrix, and
- at least one difference forming element (12) of a control unit (15) determines a difference (Δf, ΔU) from a predefinable setpoint variable (fₛₑₜₚₒᵢₙₜ, Uₛₑₜₚₒᵢₙₜ) and the detected frequency (f_{measured}) or active power and/or voltage (U_{measured}) or reactive power,
- the difference (Δf, ΔU) formed and the state matrix are made available to a control module (16, 17), which identifies from the difference (Δf, ΔU) and the state matrix those network participants (5, 6, 7) which can implement a measure for compensation of the difference (Δf, ΔU),
- wherein the control module (16, 17) defines for at least one of said network participants (5, 6, 7) a power stipulation, in particular a power change stipulation, in such a way that the difference (Δf, ΔU) can be compensated for to become zero, and
- the power stipulation, in particular the power change stipulation, is transmitted by the control unit (15) via second communication means (21) at least indirectly to the network participants (5, 6, 7) and is set by the latter.

12. System according to Claim 1 or 2, **characterized in that** the control module (16, 17) defines a power stipulation, in particular a power change stipulation, for each of the identified network participants (5, 6, 18).

13. Method according to one of the preceding claims, **characterized in that** the detection of the frequency (f_{measured}) or active power and/or of the voltage (U_{measured}) or reactive power is carried out on the high voltage side of the substation device (4).

14. Method according to one of the preceding claims, **characterized in that** the detection of values of local electrical network state variables (P_{VN}, Q_{VN}, U_{VN}, f_{VN}) is carried out at a plurality, in particular at a multiplicity, of nodes of the distribution network (3).

15. Method according to one of the preceding claims, **characterized in that** at least one of the variables: supplied or fed-in active power (P_{VN}), supplied or fed-in reactive power (Q_{VN}), network frequency (f_{VN}) or network voltage (U_{VN}) of the distribution network (3) at the node or nodes is measured as network state variable (P_{VN}, Q_{VN}, U_{VN}, f_{VN}).

16. Method according to one of the preceding claims, **characterized in that** the state matrix indicates for each network participant (5, 6, 7) whether the latter is currently available from the standpoint of the distribution network (3) for an active power increase (P+), an active power reduction (P-), for a reactive power increase (Q+) and/or for a reactive power reduction (Q-).

17. Method according to one of the preceding claims, **characterized in that** the evaluation entity (18) carries out the determination of the availability of the network participants (5, 6, 7) from the detected values of the network and participant state variables by means of the Newton-Raphson method.

18. Method according to one of the preceding claims, **characterized in that** the control module (16, 17) checks whether the difference is positive or negative, wherein the control module (16, 17)
- in the case of a positive difference (Δf) of the frequency or active power, identifies those network participants (5, 6, 7) from the state matrix which are currently available for an active power reduction (P-), and
- in the case of a negative difference (Δf) of the frequency or active power, identifies those network participants (5, 6, 7) from the state matrix which are currently available for an active power increase (P+),
and/or
- in the case of a positive difference (ΔU) of the voltage or reactive power, identifies those network participants (5, 6, 7) from the state matrix which are currently available for a reactive power reduction (Q-),
- in the case of a negative difference (ΔU) of the voltage or reactive power, identifies those network participants (5, 6, 7) from the state matrix which are currently available for a reactive power increase (Q+).

19. Method according to one of the preceding claims, **characterized in that** the control unit (15) has a decision entity (27), to which a preference matrix (26) is made available, in which are identified those network participants (5, 6, 7) which are to be preferred for the implementation of the measure, wherein the decision entity selects from the identified network participants (5, 6, 7) those which are to be preferred in accordance with the preference matrix (26).

## Revendications

1. Système de régulation de la stabilité en tension et/ou de la stabilité en fréquence dans un système d'alimentation en énergie (1), lequel possède un réseau de transmission (2) d'un premier niveau de tension et au moins un réseau de distribution (3), connecté à celui-ci par le biais d'un dispositif de transformation de tension (4), d'un deuxième niveau de tension plus bas que le premier niveau de tension, le réseau de distribution (3) étant relié à une pluralité de participants au réseau (5, 6, 7) réglables, **caractérisé par**
- des premiers moyens de mesure (13, 14) destinés à acquérir la fréquence (f_{gemessen}) ou la puissance active et/ou destinés à acquérir la tension (U_{gemessen}) ou la puissance réactive au niveau d'un noeud du réseau de transmission (2),
- des deuxièmes moyens de mesure (20) destinés à acquérir des valeurs de grandeurs d'état électriques du réseau (P_{VN}, Q_{VN}, U_{VN}, f_{VN}) au niveau d'au moins un noeud du réseau de distribution (3) ainsi que
- des troisièmes moyens de mesure (24) destinés à acquérir des valeurs de grandeurs d'état électriques de participant (P_{Last}, P_{SpeicherVN}, Q_{SpeicherVN}, P_{DEA}, Q_{DEA}, U_{DEA}, f_{DEA}, Disponibilité) des participants au réseau (5, 6, 7),
- une instance d'évaluation (18) destinée à évaluer l'état du réseau, laquelle est reliée au moins indirectement aux deuxièmes et troisièmes moyens de mesure (20, 24) par le biais de premiers moyens de communication (19) et laquelle est conçue pour déterminer, à partir des valeurs acquises des grandeurs d'état de réseau et de participant, la disponibilité de chaque participant au réseau (5, 6, 7) pour une puissance consommée et/ou une puissance délivrée supplémentaire et la mettre à disposition sous la forme d'une matrice d'états, et
- une unité de régulation (15) comprenant au moins un soustracteur (12) destiné à former une différence (Δf, ΔU) entre une grandeur de consigne (f_{Soll}, U_{Soll}) pouvant être prédéfinie et la fréquence (f_{gemessen}) ou la puissance active et/ou la tension (U_{gemessen}) ou la puissance réactive acquises, comprenant en outre au moins un module de régulation (16, 17) auquel peuvent être acheminées la différence (Δf, ΔU) formée et la matrice d'états, le module de régulation (16, 17) étant conçu pour identifier, à partir de la différence (Δf, ΔU) et de la matrice d'états, les participants au réseau (5, 6, 7) qui peuvent mettre en oeuvre une mesure en vue de compenser la différence (Δf, ΔU) et pour définir, pour au moins l'un de ces participants au réseau (5, 6, 7), une indication de puissance, notamment une indication de modification de puissance, de telle sorte que la différence (Δf, ΔU) peut être compensée vers zéro, l'unité de régulation (15) étant reliée au moins indirectement aux participants au réseau (5, 6, 7) par le biais de deuxièmes moyens de communication (21) en vue de transmettre l'indication de puissance, notamment l'indication de modification de puissance.

2. Système selon la revendication 1, **caractérisé en ce que** le nombre de participants au réseau (5, 6, 7) comprend au moins une charge (5) régulable, au moins un accumulateur d'énergie (7) régulable et au moins un équipement de conversion d'énergie (6) régulable décentralisé qui injecte dans le réseau de distribution (3).

3. Système selon la revendication 1 ou 2, **caractérisé en ce que** le module de régulation (16, 17) est conçu pour définir une indication de puissance, notamment une indication de modification de puissance, pour chacun des participants au réseau (5, 6, 7) identifiés.

4. Système selon l'une des revendications précédentes, **caractérisé en ce que** les premiers moyens de mesure (13, 14) sont disposés du côté haute tension du dispositif de transformation de tension (4).

5. Système selon l'une des revendications précédentes, **caractérisé en ce que** les deuxièmes moyens de mesure (20) sont disposés au niveau de plusieurs, notamment d'une pluralité de noeud du réseau de distribution (3) en vue d'acquérir respectivement les valeurs de grandeurs d'état électriques du réseau (P_{VN}, Q_{VN}, U_{VN}, f_{VN}) locales du réseau de distribution (3).

6. Système selon l'une des revendications précédentes, **caractérisé en ce que** les grandeurs d'état du réseau (P_{VN}, Q_{VN}, U_{VN}, f_{VN}) sont au moins l'une des grandeurs suivantes : puissance active (P_{VN}) fournie ou injectée, puissance réactive (Q_{VN}) fournie ou injectée, fréquence de réseau (f_{VN}) ou tension de réseau (U_{VN}) du réseau de distribution (3) au niveau du ou des noeuds.

7. Système selon l'une des revendications précédentes, **caractérisé en ce que** dans la matrice d'états, il est indiqué pour chaque participant au réseau (5, 6, 7) si celui-ci, du point de vue du réseau de distribution (3), est actuellement disponible pour une augmentation de la puissance active (P+), pour une réduction de la puissance active (P-), pour une augmentation de la puissance réactive (Q+) et/ou pour une réduction de la puissance réactive (Q-).

8. Système selon l'une des revendications précédentes, **caractérisé en ce que** l'instance d'évaluation (18) est conçue pour effectuer la détermination de la disponibilité des participants au réseau (5, 6, 7) à partir des valeurs acquises des grandeurs d'état de réseau et de participant au moyen de la méthode de Newton-Raphson.

9. Système selon l'une des revendications précédentes, **caractérisé en ce que** le module de régulation (16, 17) possède un discriminateur de cas (25) destiné à déterminer si la différence est positive ou négative, le module de régulation (16, 17) étant conçu pour
- dans le cas d'une différence (Δf) positive de la fréquence ou de la puissance active, identifier à partir de la matrice d'états les participants au réseau (5, 6, 7) qui sont actuellement disponibles pour une réduction de la puissance active (P-), et
- dans le cas d'une différence (Δf) négative de la fréquence ou de la puissance active, identifier à partir de la matrice d'états les participants au réseau (5, 6, 7) qui sont actuellement disponibles pour une augmentation de la puissance active (P+),
et/ou
- dans le cas d'une différence (ΔU) positive de la tension ou de la puissance réactive, identifier à partir de la matrice d'états les participants au réseau (5, 6, 7) qui sont actuellement disponibles pour une réduction de la puissance réactive (Q-),
- dans le cas d'une différence (ΔU) négative de la tension ou de la puissance réactive, identifier à partir de la matrice d'états les participants au réseau (5, 6, 7) qui sont actuellement disponibles pour une augmentation de la puissance réactive (Q-).

10. Système selon l'une des revendications précédentes, **caractérisé en ce que** l'unité de régulation (15) comprend une matrice de préférences (26) pouvant être prédéfinie dans laquelle sont caractérisés les participants au réseau (5, 6, 7) qui sont à favoriser pour la mise en oeuvre de la mesure, et **en ce que** le l'unité de régulation (15) possède une instance de décision (27) qui est conçue pour sélectionner, à partir des participants au réseau (5, 6, 7) identifiés, ceux qui sont à favoriser conformément à la matrice de préférences (26).

11. Procédé de régulation de la stabilité en tension et/ou de la stabilité en fréquence dans un système d'alimentation en énergie (1), lequel possède un réseau de transmission (2) d'un premier niveau de tension et au moins un réseau de distribution (3), couplé à celui-ci par le biais d'un dispositif de transformation de tension (4), d'un deuxième niveau de tension plus bas que le premier niveau de tension, le réseau de distribution (3) étant relié à une pluralité de participants au réseau (5, 6, 7) régulables, **caractérisé en ce que**
- des premiers moyens de mesure (13, 14) acquièrent la fréquence (f_{gemessen}) ou la puissance active et/ou la tension (U_{gemessen}) ou la puissance réactive au niveau d'un noeud du réseau de transmission (2),
- des deuxièmes moyens de mesure (20) acquièrent des valeurs de grandeurs d'état électriques du réseau (P_{VN}, Q_{VN}, U_{VN}, f_{VN}) au niveau d'au moins un noeud du réseau de distribution (3) ainsi que
- des troisièmes moyens de mesure (24) acquièrent des valeurs de grandeurs d'état électriques de participant (P_{Last}, P_{SpeicherVN}, Q_{SpeicherVN}, P_{DEA}, Q_{DEA}, U_{DEA}, f_{DEA}, Disponibilité) des participants au réseau (5, 6, 7),
- une instance d'évaluation (18) réalisant une évaluation de l'état du réseau et, à partir des valeurs acquises des grandeurs d'état de réseau et de participant, détermine la disponibilité de chaque participant au réseau (5, 6, 7) pour une puissance consommée et/ou une puissance délivrée supplémentaire et la met à disposition sous la forme d'une matrice d'états, et
- au moins un soustracteur (12) d'une unité de régulation (15) déterminant une différence (Δf, ΔU) entre une grandeur de consigne (f_{Soll}, U_{Soll}) pouvant être prédéfinie et la fréquence (f_{gemessen}) ou la puissance active et/ou la tension (U_{gemessen}) ou la puissance réactive acquises,
- la différence (Δf, ΔU) formée et la matrice d'états étant mises à disposition d'un module de régulation (16, 17) qui, à partir de la différence (Δf, ΔU) et de la matrice d'états, identifie les participants au réseau (5, 6, 7) qui peuvent mettre en oeuvre une mesure en vue de compenser la différence (Δf, ΔU),
- le module de régulation (16, 17) définissant, pour au moins l'un de ces participants au réseau (5, 6, 7), une indication de puissance, notamment une indication de modification de puissance, de telle sorte que la différence (Δf, ΔU) peut être compensée vers zéro, et
- l'indication de puissance, notamment l'indication de modification de puissance, étant transmise au moins indirectement aux participants au réseau (5, 6, 7) depuis l'unité de régulation (15) par le biais de deuxièmes moyens de communication (21) et réglée par ceux-ci.

12. Système selon la revendication 1 ou 2, **caractérisé en ce que** le module de régulation (16, 17) définit une indication de puissance, notamment une indication de modification de puissance, pour chacun des participants au réseau (5, 6, 18) identifiés.

13. Procédé selon l'une des revendication précédentes, **caractérisé en ce que** l'acquisition de la fréquence (f_{gemessen}) ou de la puissance active et/ou de la tension (U_{gemessen}) ou de la puissance réactive s'effectue du côté haute tension du dispositif de transformation de tension (4).

14. Procédé selon l'une des revendications précédentes, **caractérisé en ce que** l'acquisition de valeurs de grandeurs d'état électriques du réseau (P_{VN}, Q_{VN}, U_{VN}, f_{VN}) locales s'effectue au niveau de plusieurs, notamment d'une pluralité de noeuds du réseau de distribution (3).

15. Procédé selon l'une des revendications précédentes, **caractérisé en ce que** les grandeurs d'état du réseau (P_{VN}, Q_{VN}, U_{VN}, f_{VN}) mesurées sont au moins l'une des grandeurs suivantes : puissance active (P_{VN}) fournie ou injectée, puissance réactive (Q_{VN}) fournie ou injectée, fréquence de réseau (f_{VN}) ou tension de réseau (U_{VN}) du réseau de distribution (3) au niveau du ou des noeuds.

16. Procédé selon l'une des revendications précédentes, **caractérisé en ce que** dans la matrice d'états, il est indiqué pour chaque participant au réseau (5, 6, 7) si celui-ci, du point de vue du réseau de distribution (3), est actuellement disponible pour une augmentation de la puissance active (P+), pour une réduction de la puissance active (P-), pour une augmentation de la puissance réactive (Q+) et/ou pour une réduction de la puissance réactive (Q-).

17. Procédé selon l'une des revendications précédentes, **caractérisé en ce que** l'instance d'évaluation (18) effectue la détermination de la dispanibilité des participants au réseau (5, 6, 7) à partir des valeurs acquises des grandeurs d'état de réseau et de participant au moyen de la méthode de Newton-Raphsan.

18. Système selon l'une des revendications précédentes, **caractérisé en ce que** le module de régulation (16, 17) vérifie si la différence est positive ou négative, le module de régulation (16, 17),
- dans le cas d'une différence (Δf) positive de la fréquence ou de la puissance active, identifiant à partir de la matrice d'états les participants au réseau (5, 6, 7) qui sont actuellement disponibles pour une réduction de la puissance active (P-), et
- dans le cas d'une différence (Δf) négative de la fréquence ou de la puissance active, identifiant à partir de la matrice d'états les participants au réseau (5, 6, 7) qui sont actuellement disponible pour une augmentation de la puissance active (P+),
et/ou
- dans le cas d'une différence (ΔU) positive de la tension ou de la puissance réactive, identifiant à partir de la matrice d'états les participants au réseau (5, 6, 7) qui sont actuellement disponibles pour une augmentation de la puissance réactive (Q+),
- dans le cas d'une différence (ΔU) négative de la tension ou de la puissance réactive, identifiant à partir de la matrice d'états les participants au réseau (5, 6, 7) qui sont actuellement disponibles pour une réduction de la puissance réactive (Q-).

19. Procédé selon l'une des revendications précédentes, **caractérisé en ce que** l'unité de régulation (15) possède une instance de décision (27) à laquelle est mise à dispositicn une matrice de préférences (26) dans laquelle sont identifiés les participants au réseau (5, 6, 7) qui sont à favoriser pour la mise en oeuvre de la mesure, l'instance de décision sélectionnant, à partir des participants au réseau (5, 6, 7) identifiés, ceux qui sont à favoriser conformément à la matrice de préférences (26).
